(19) Europäisches Patentamt / European Patent Office / Office européen des brevets

(11) **EP 4 417 378 A1**

(12) **EUROPEAN PATENT APPLICATION**

(43) Date of publication:
**21.08.2024 Bulletin 2024/34**

(21) Application number: **24153979.0**

(22) Date of filing: **25.01.2024**

(51) International Patent Classification (IPC):
***B25J 9/16*** *(2006.01)*

(52) Cooperative Patent Classification (CPC):
**B25J 9/1687; B25J 9/1633;** G05B 2219/40032

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.02.2023 JP 2023021070**

(71) Applicant: **OMRON Corporation
Kyoto 600-8530 (JP)**

(72) Inventor: **EGI, Mamoru
Kyoto-shi, 600-8530 (JP)**

(74) Representative: **Mewburn Ellis LLP
Aurora Building
Counterslip
Bristol BS1 6BX (GB)**

(54) **CONTROLLER, CONTROL METHOD AND CONTROL PROGRAM**

(57) There is provided a controller for fitting a first workpiece and a second workpiece to each other using a robot. The robot has a gripping mechanism for gripping the first workpiece, and a force sensor. The controller causes the robot to perform an operation of pressing the first workpiece against the second workpiece with a predetermined force, and an operation of changing a posture of the first workpiece with respect to the second workpiece in a state where the first workpiece is pressed against the second workpiece. The controller searches for the posture of the first workpiece in which a first surface of the first workpiece to be in contact with the second workpiece and a second surface of the second workpiece to be in contact with the first workpiece are parallel to each other, based on an evaluation index related to a distance between the first workpiece and the second workpiece.

FIG.1

EP 4 417 378 A1

**Description**

The present invention relates to a controller, a control method, and a control program.

INTRODUCTION

In the field of industrial automation, robots are used for various applications. As one of such applications, there is work of fitting two workpieces.

For example, Japanese Patent Laying-Open No. 2018-199172 discloses a method for efficiently performing work of inserting an insertion object into an insertion target object without performing a search operation. More specifically, a control method is disclosed in which, in a second contact operation, force control is performed in which a component of a target force in a second direction orthogonal to a first direction is set to a value greater than zero, so that the insertion object and the insertion target object are brought into contact with a portion different from a contact portion in a first contact operation.

SUMMARY

For example, in a case where two workpieces are fitted using a robot, it is necessary to determine appropriate position and posture of the workpiece by a search operation. In order to start the search operation, it is necessary to arrange one workpiece in the vicinity of a fitting hole provided in the other workpiece. It is necessary to appropriately determine an initial position and an initial posture (hereinafter, referred to as "approach position") of the workpiece before starting the search operation.

The aforementioned document in the related art does not disclose a method of appropriately determining the approach position.

The present invention provides a method for appropriately determining at least a part of an approach position in a case where two workpieces are fitted.

According to an embodiment, there is provided a controller for fitting a first workpiece and a second workpiece to each other using a robot. The robot includes a gripping mechanism for gripping the first workpiece, and a force sensor. The controller causes the robot to perform an operation of pressing the first workpiece against the second workpiece with a predetermined force, and an operation of changing a posture of the first workpiece with respect to the second workpiece in a state where the first workpiece is pressed against the second workpiece. The controller searches for the posture of the first workpiece in which a first surface of the first workpiece to be in contact with the second workpiece and a second surface of the second workpiece to be in contact with the first workpiece are parallel to each other, based on an evaluation index related to a distance between the first workpiece and the second workpiece.

According to this configuration, since the posture of the first workpiece in which the first surface of the first workpiece to be in contact with the second workpiece and the second surface of the second workpiece to be in contact with the first workpiece are parallel to each other can be determined based on the evaluation index related to the distance between the first workpiece and the second workpiece, at least part of information necessary for the approach position can be determined based on the determined posture of the first workpiece.

The evaluation index may be a distance from a surface set in advance in the second workpiece to a measurement point set in a coordinate system with an arm tip end of the robot as a reference. According to this configuration, since the evaluation can be performed based on the distance from the surface set in advance in the second workpiece to the first workpiece, the approach position suitable for the actual operation can be determined.

The measurement point may be set such that, when the measurement point is projected onto a surface including the first surface, a projection position is present within a range defined by two outermost sides of the first surface to be in contact with the second surface in the operation of changing the posture of the first workpiece. According to this configuration, since the value of the evaluation index more accurately reflects the relationship between the first surface and the second surface, the decision accuracy of the approach position can be improved.

The evaluation index may be a correction amount for instructions given to the robot, for pressing the first workpiece against the second workpiece with the predetermined force. According to this configuration, since the posture of the first workpiece in which the first surface and the second surface are parallel to each other can be determined based on the correction amount calculated in the control system, the decision accuracy of the approach position can be improved.

The controller may determine a posture in which the evaluation index becomes an extreme value, as the posture of the first workpiece in which the first surface and the second surface are parallel to each other. According to this configuration, the posture of the first workpiece in which the first surface and the second surface are parallel to each other can be determined based on the value of the evaluation index that changes according to the posture of the first workpiece with respect to the second workpiece.

A reference point for controlling a position and a posture of the robot may be set inside the first surface of the first workpiece. According to this configuration, the posture of the first workpiece with respect to the second workpiece can be more accurately controlled.

The operation of changing the posture of the first workpiece with respect to the second workpiece may include an operation of rotating the first workpiece in a first direction around an axis orthogonal to a direction in which the first workpiece is pressed against the second workpiece, and an operation of rotating the first workpiece in a second direction that is an opposite direction to the first direction. According to this configuration, it is possible to reduce an error due to a delay that may occur in a case of rotating in one direction.

The controller may determine an average of a first posture of the first workpiece determined by rotating the first workpiece in the first direction and a second posture of the first workpiece determined by rotating the first workpiece in the second direction, as the posture of the first workpiece in which the first surface and the second surface are parallel to each other. According to this configuration, since it is possible to cancel the delay that may occur in a case of rotating in the first direction and the delay that may occur in a case of rotating in the second direction, the decision accuracy of the approach position can be improved.

The operation of changing the posture of the first workpiece with respect to the second workpiece may include an operation of changing the posture of the first workpiece with respect to the second workpiece at a first change speed, and an operation of changing the posture of the first workpiece with respect to the second workpiece at a second change speed different from the first change speed. According to this configuration, the change speed at which the posture of the first workpiece is changed is varied, so that the search can be performed in a short time and with high accuracy.

The second change speed may be smaller than the first change speed. According to this configuration, after the posture of the first workpiece is changed at the first change speed to determine the posture of the first workpiece in which the first surface and the second surface are parallel to each other, the posture of the first workpiece in which the first surface and the second surface are parallel to each other can be determined at the second change speed lower than the first change speed, so that the decision accuracy of the approach position can be improved.

The controller may determine the posture of the first workpiece in which the first surface and the second surface are parallel to each other, based on a result of a search obtained by rotating the first workpiece only in a first direction around an axis orthogonal to a direction in which the first workpiece is pressed against the second workpiece. Subsequently, the controller may update the posture of the first workpiece in which the first surface and the second surface are parallel to each other, based on a result of a search obtained by rotating the first workpiece in the first direction and a result of a search obtained by rotating the first workpiece in a second direction that is an opposite direction to the first direction. According to this configuration, the accuracy of the search can be improved by rotating the first workpiece in both directions while shortening the time required for the search by rotating the first workpiece only in the first direction.

The controller may rotate the first workpiece at a first change speed in a case of rotating the first workpiece only in the first direction. The controller may rotate the first workpiece at a second change speed smaller than the first change speed in a case of rotating the first workpiece in the first direction and the second direction. According to this configuration, in a case of rotating the first workpiece in the first direction and the second direction, the accuracy of the search can be improved by reducing the change speed.

The controller may remove an offset based on force information output from the force sensor in a state where the first workpiece and the second workpiece are not in contact with each other. According to this configuration, it is possible to reduce an error caused by the offset present in the force sensor in a non-contact state between the first workpiece and the second workpiece.

According to another embodiment, there is provided a control method for fitting a first workpiece and a second workpiece to each other using a robot. The first workpiece is gripped by a gripping mechanism of the robot. The control method includes pressing the first workpiece against the second workpiece with a predetermined force, causing the robot to change a posture of the first workpiece with respect to the second workpiece in a state where the first workpiece is pressed against the second workpiece, and searching for the posture of the first workpiece in which a first surface of the first workpiece to be in contact with the second workpiece and a second surface of the second workpiece to be in contact with the first workpiece are parallel to each other, based on an evaluation index related to a distance between the first workpiece and the second workpiece.

According to still another embodiment, there is provided a control program for fitting a first workpiece and a second workpiece to each other. The first workpiece is gripped by a gripping mechanism of a robot. The control program causes a computer to perform giving instructions to the robot for pressing the first workpiece against the second workpiece with a predetermined force, giving instructions to the robot for changing a posture of the first workpiece with respect to the second workpiece in a state where the first workpiece is pressed against the second workpiece, and searching for the posture of the first workpiece in which a first surface of the first workpiece to be in contact with the second workpiece and a second surface of the second workpiece to be in contact with the first workpiece are parallel to each other, based on an evaluation index related to a distance between the first workpiece and the second workpiece.

The above and other objects, features, aspects and advantages of the present invention will become apparent from the following detailed description of the present invention taken in conjunction with the accompanying drawings.

BRIEF DESCRIPTION OF THE DRAWINGS

Fig. 1 is a schematic diagram illustrating an example of an assembly operation of a robot system according to the present embodiment.

Fig. 2 is a schematic diagram illustrating a setting example of a TCP in the robot system according to the present embodiment.

Fig. 3 is a schematic diagram illustrating a setting example of the TCP in the robot system according to the present embodiment.

Fig. 4 is a schematic diagram illustrating a hardware configuration example of the robot system according to the present embodiment.

Fig. 5 is a flowchart illustrating a processing procedure of a calibration process of the approach position according to the present embodiment.

Fig. 6 is a diagram for describing a positional relationship determined by the calibration process of the approach position according to the present embodiment.

Fig. 7 is a diagram for describing processing contents of an Rx/Ry/Z calibration process according to the present embodiment.

Figs. 8A and 8B are diagrams for describing a setting example of the TCP and a measurement point in the Rx/Ry/Z calibration process according to the present embodiment.

Fig. 9 is a diagram for describing a setting example of the measurement point in the Rx/Ry/Z calibration process according to the present embodiment.

Fig. 10 is a diagram for describing processing contents in a case where a distance from a receiving surface (design value) is used as an evaluation index in the Rx/Ry/Z calibration process according to the present embodiment.

Fig. 11 is a schematic diagram illustrating an example of a control system that realizes force control about a Zt axis according to the present embodiment.

Fig. 12 is a diagram for describing processing contents in a case where a Z position correction amount is used as an evaluation index in the Rx/Ry/Z calibration process according to the present embodiment.

Fig. 13 is a diagram illustrating an example of a processing result in a case where the Z position correction amount is used as an evaluation index in the Rx/Ry/Z calibration process according to the present embodiment.

Fig. 14 is a flowchart illustrating a more detailed processing procedure of the Rx/Ry/Z calibration process according to the present embodiment.

Figs. 15A to 15E are diagrams for describing operation examples in a case of determining a Z calibration value in the Rx/Ry/Z calibration process according to the present embodiment.

Figs. 16A to 16E are diagrams for describing operation examples in a case of determining an Ry calibration value in the Rx/Ry/Z calibration process according to the present embodiment.

Figs. 17A to 17D are diagrams for describing a temporal change of the Z position correction amount in the Rx/Ry/Z calibration process according to the present embodiment.

Fig. 18 is a flowchart illustrating a processing procedure of a low-speed search included in the Rx/Ry/Z calibration process according to the present embodiment.

Fig. 19 is a flowchart illustrating a processing procedure of the low-speed search included in the Rx/Ry/Z calibration process according to the present embodiment.

Figs. 20A to 20C are diagrams for describing a process of determining a Z calibration value in the Rx/Ry/Z calibration process according to the present embodiment.

Figs. 21A to 21D are diagrams for describing a process of determining a first direction vector in an X/Y/Rz calibration process according to the present embodiment.

Figs. 22A to 22D are diagrams for describing a process of determining a second direction vector in the X/Y/Rz calibration process according to the present embodiment.

Fig. 23 is a diagram for describing a process of determining an XtYt origin in the X/Y/Rz calibration process according to the present embodiment.

Figs. 24 and 25 are flowcharts illustrating a more detailed processing procedure of the X/Y/Rz calibration process according to the present embodiment.

Fig. 26 is a diagram for describing an example of a position measurement method for calculating a direction vector in the X/Y/Rz calibration process according to the present embodiment.

Fig. 27 is a diagram for describing a modification example of a process of calculating a direction vector in the X/Y/Rz calibration process according to the present embodiment.

DETAILED DESCRIPTION

Embodiments of the present invention will be described in detail with reference to the drawings. Note that, in the drawings, the same or corresponding parts are denoted by the same reference numerals, and the description thereof will not be repeated.

<A. Application Example>

First, an example of a scene to which the present invention is applied will be described.

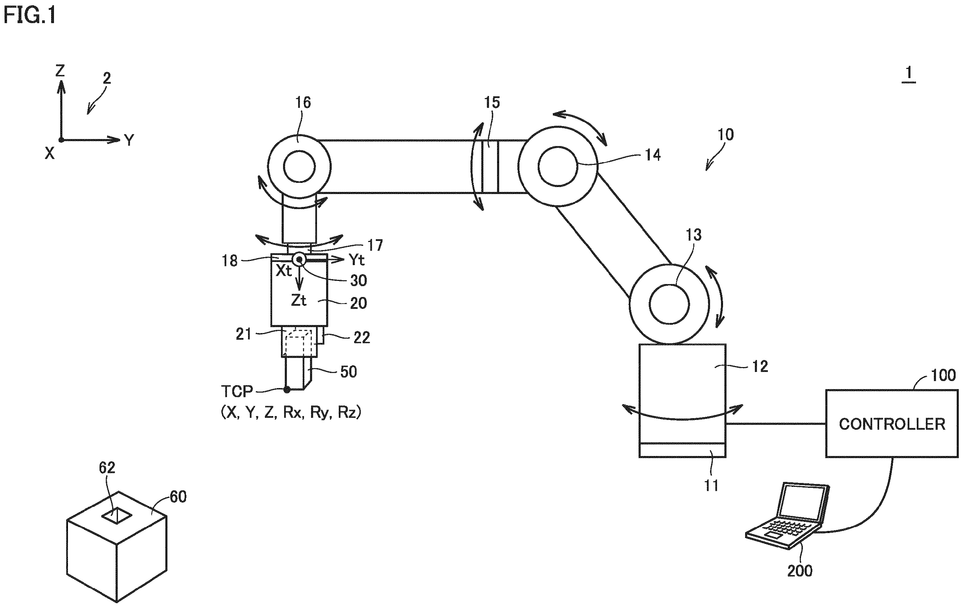

Fig. 1 is a schematic diagram illustrating an example of an assembly operation of a robot system 1 according to the present embodiment. Referring to Fig. 1, robot system 1 includes an articulated robot (hereinafter, also simply referred to as "robot 10") and a controller 100 that controls robot 10.

Robot system 1 causes a first workpiece 50 and a second workpiece 60 to be fitted. First workpiece 50 and second workpiece 60 are made of a material having rigidity. Second workpiece 60 is provided with a fitting hole 62, and first workpiece 50 is inserted into fitting hole 62. That is, robot system 1 inserts first workpiece 50 into fitting hole 62 of second workpiece 60.

In the present specification, "fitting" includes both a state in which another workpiece is inserted into a hole (fitting hole) having an arbitrary cross-sectional shape and an operation for causing the workpiece to be inserted into the hole. Note that, in a case where an operation of inserting another workpiece into the hole (fitting hole) is intended, the expression "fitting operation" may be used. The fitting hole may have any cross-sectional shape, but in the following description, the cross-sectional shape is a quadrangular shape as an example.

In the fitting operation, normally, second workpiece 60 is arranged at a predetermined position. Robot 10 moves first workpiece 50 to initial position and posture (approach position) while gripping first workpiece 50. Thereafter, a search operation and an insertion operation are performed.

In the present specification, the "approach position" means an initial position and an initial posture of first workpiece 50 (mating workpiece) that is inserted into fitting hole 62 of second workpiece 60 (mated workpiece). Although described as "approach position" for convenience of description, a total of six elements of the position (three elements) and the posture (three elements) are typically included.

In the present specification, "gripping" includes any operation for a robot or the like to hold a workpiece. Although Fig. 1 illustrates an example in which a workpiece is held using a plurality of claw portions, a method using a magnetic force (for example, an electromagnet) may be adopted, a method using a pressure difference (negative pressure) may be adopted, or any other method may be adopted.

Robot 10 illustrated in Fig. 1 includes a base 11 and a plurality of movable portions 12, 13, 14, 15, 16, and 17. Movable portions 12, 13, 14, 15, 16, and 17 correspond to joints of robot 10. Each of movable portions 12, 13, 14, 15, 16, and 17 drives a link constituting robot 10 along a rotation axis as illustrated in Fig. 1.

A gripping mechanism 20 is provided at an arm tip end of robot 10. Gripping mechanism 20 has two claw portions 21 and 22 for gripping first workpiece 50. By adjusting a distance between claw portion 21 and claw portion 22, first workpiece 50 is gripped and released. In a calibration process of the approach position described below, first workpiece 50 is kept in a state of being held by gripping mechanism 20 of robot 10.

A force sensor 18 is provided between the arm tip end of robot 10 and gripping mechanism 20. Force sensor 18 outputs a detection result including the magnitude of a load, a direction of the load, and the like generated in gripping mechanism 20 or the like. The detection result of force sensor 18 may be output as a vector value.

In this manner, robot 10 has gripping mechanism 20 and force sensor 18 in addition to the plurality of joints.

An information processing apparatus 200 may be connected to controller 100. Information processing apparatus 200 is, for example, a general-purpose computer. Information processing apparatus 200 presents information from controller 100 to a user, and gives a user instruction to controller 100 according to a user operation.

In the example illustrated in Fig. 1, a robot coordinate system 2 based on robot 10 is defined. In addition, a tool coordinate system 30 based on the arm tip end is defined. Tool coordinate system 30 includes an Xt axis and a Yt axis that are parallel to a surface of the arm tip end and a Zt axis orthogonal to the surface. Typically, tool coordinate system 30 is defined such that the Xt axis and the Yt axis are orthogonal to each other, but may be defined in any manner as long as the Xt axis and the Yt axis are not parallel to each other.

A reference point for controlling the position and the posture of robot 10 is referred to as a tool center point (TCP). The TCP is defined in tool coordinate system 30 as an example. The TCP includes six elements of the position (X, Y, Z) and the posture (Rx, Ry, Rz). The position (X, Y, Z) is a position on each of the Xt, Yt, and Zt axes of tool coordinate system 30. The posture (Rx, Ry, Rz) is an angle around each of the Xt, Yt, and Zt axes of tool coordinate system 30.

Controller 100 controls robot 10 (angles of movable portions 12, 13, 14, 15, 16, and 17) such that the TCP is at target position and posture.

Controller 100 can calculate the position and the posture of the TCP by correcting the position and the posture of the arm tip end of robot 10 with an offset vector (position and posture). The TCP may be set at an arbitrary position according to the content of the fitting operation. For example, a corner of a surface (hereinafter, also referred to as "tip end surface 52") of first workpiece 50 to be inserted into second workpiece 60 may be set as the TCP, or a center of tip end surface 52 of first workpiece 50 may be set as the TCP. In the example illustrated in Fig. 1, the TCP is set at the corner of tip end surface 52 of first workpiece 50.

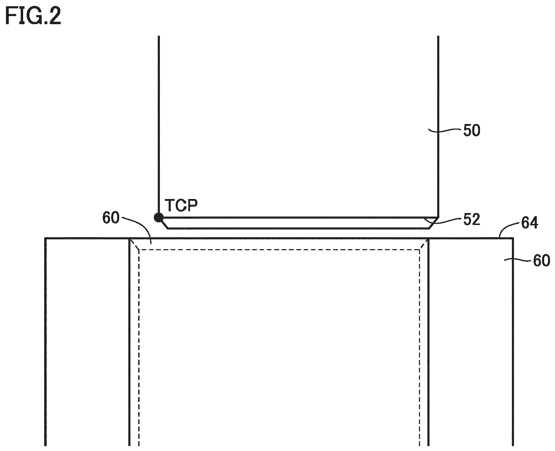

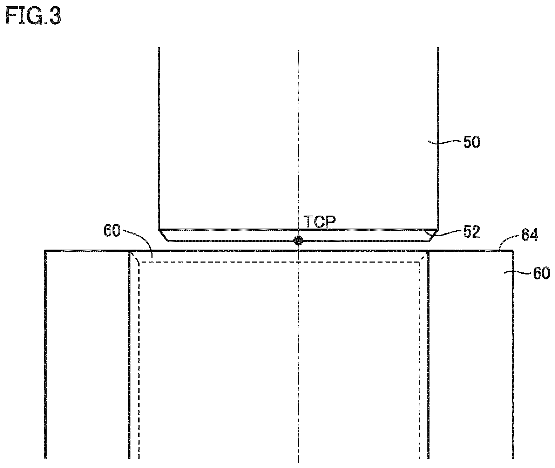

Figs. 2 and 3 are schematic diagrams illustrating setting examples of the TCP in robot system 1 according to the present embodiment.

Fig. 2 illustrates, as an example, a setting example of the TCP suitable for an operation of searching for the corner of fitting hole 62 of second workpiece 60. That is, by setting the corner of tip end surface 52 of first workpiece 50 as the TCP, it is possible to search for the position and the posture at which the corner of first workpiece 50 and the corner of fitting hole 62 of second workpiece 60 are brought into contact with each other based on the set TCP.

Fig. 3 illustrates, as an example, a setting example of the TCP suitable for searching for the position of fitting hole 62 of second workpiece 60. That is, by setting the center of tip end surface 52 of first workpiece 50 as the TCP, it is possible to search for fitting hole 62 of second workpiece 60 into which first workpiece 50 is to be inserted, based on the set TCP. The contact between first workpiece 50 and second workpiece 60 can also be searched for.

<B. Hardware Configuration Example of Robot System 1>

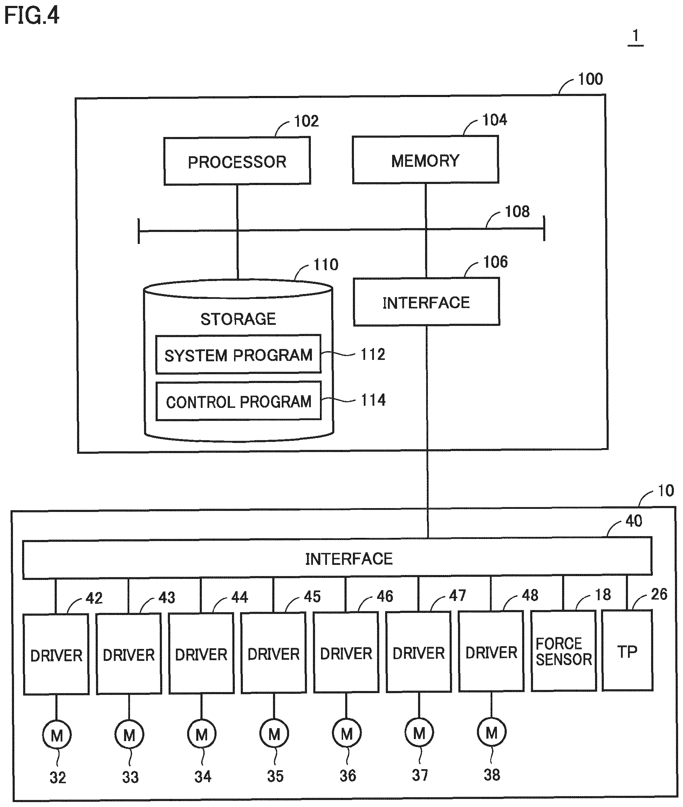

Fig. 4 is a schematic diagram illustrating a hardware configuration example of robot system 1 according to the present embodiment. Referring to Fig. 4, robot 10 includes motors 32, 33, 34, 35, 36, and 37 respectively associated with movable portions 12, 13, 14, 15, 16, and 17, and drivers 42, 43, 44, 45, 46, and 47 that respectively drive motors 32, 33, 34, 35, 36, and 37.

Robot 10 includes a motor 38 for driving claw portions 21 and 22, and a driver 48 for driving motor 38.

Drivers 42, 43, 44, 45, 46, 47, and 48, force sensor 18, and a teaching pendant 26 are electrically connected to controller 100 via an interface 40.

Teaching pendant 26 performs teaching or the like of robot 10 according to the user operation. Teaching pendant 26 may be configured to be detachable from robot 10.

Controller 100 is a type of computer, and includes a processor 102, a memory 104, an interface 106, and a storage 110 as main hardware components. These components are electrically connected via a bus 108.

Processor 102 includes, for example, a central processing unit (CPU), a micro-processing unit (MPU), and the like. Memory 104 includes, for example, a volatile storage device such as a dynamic random access memory (DRAM) or a static random access memory (SRAM). Storage 110 includes a non-volatile storage device such as a solid state disk (SSD) or a flash memory. Storage 110 stores a system program 112 for realizing basic processing and a control program 114 for controlling robot 10. Control program 114 includes computer-readable commands for controlling robot 10. Processor 102 reads system program 112 and control program 114 stored in storage 110, develops system program 112 and control program 114 in memory 104, and executes system program 112 and control program 114 to realize a process for controlling robot 10 as described later.

Interface 106 is responsible for exchanging signals and/or data between controller 100 and robot 10. In robot system 1, instructions for controlling drivers 42, 43, 44, 45, 46, 47, and 48 is transmitted from controller 100 to robot 10, and the detection result of force sensor 18 is transmitted from robot 10 to controller 100.

Although Fig. 4 illustrates the configuration example in which a necessary process is provided by processor 102 executing the program, a part or all of the provided process may be implemented using a dedicated hardware circuit (for example, an application specific integrated circuit (ASIC), a field-programmable gate array (FPGA), or the like).

Although Fig. 4 illustrates an example in which controller 100 is configured independently of robot 10, some or all of the functions and processes provided by controller 100 may be incorporated in robot 10. Robot 10 may incorporate controller 100. Controller 100 may be a controller dedicated to control of a robot, or may be a general-purpose programmable logic controller (PLC) or a personal computer.

Some or all of the functions and processes provided by controller 100 may be implemented using computing resources on a network referred to as a so-called cloud.

As described above, robot system 1 according to the present embodiment may be mounted in any configuration.

<C. Calibration Process of Approach Position>

Next, the calibration process of the approach position according to the present embodiment will be described.

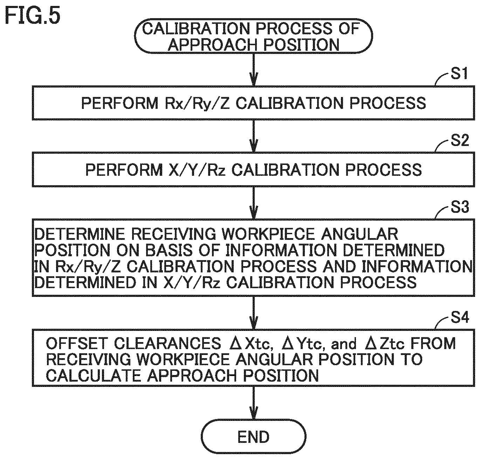

Fig. 5 is a flowchart illustrating a processing procedure of the calibration process of the approach position according to the present embodiment. Each step illustrated in Fig. 5 may be realized by processor 102 of controller 100 executing system program 112 and/or control program 114.

Referring to Fig. 5, controller 100 performs an Rx/Ry/Z calibration process (step S1). The Rx/Ry/Z calibration process determines an angle Rx around the Xt axis, an angle Ry around the Yt axis, and a position Z on the Zt axis for defining the approach position.

Subsequently, controller 100 performs an X/Y/Rz calibration process (step S2). The X/Y/Rz calibration process determines a position X on the Xt axis, a position Y on the Yt axis, and an angle Rz around the Zt axis for defining the approach position.

Controller 100 determines position and posture (hereinafter, also referred to as "receiving workpiece angular position") corresponding to the corner of fitting hole 62 of second workpiece 60 based on the information determined in the Rx/Ry/Z calibration process and the information determined in the X/Y/Rz calibration process (step S3). Controller 100 offsets predetermined clearances $\Delta$Xtc, $\Delta$Ytc, and $\Delta$Ztc from the receiving workpiece angular position to calculate the approach position (step S4). Then, the process ends.

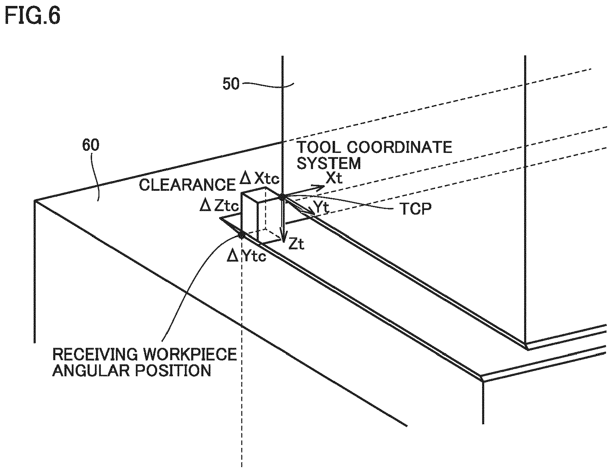

Fig. 6 is a diagram for describing a positional relationship determined by the calibration process of the approach position according to the present embodiment. Referring to Fig. 6, in a case where the receiving workpiece angular position is (Xtl, Ytl, Ztl, Rxl, Ryl, Rzl), the approach position can be calculated as (Xtl+$\Delta$Xtc, Ytl+$\Delta$Ytc, Ztl+$\Delta$Ztc, Rxl, Ryl, Rzl). That is, the approach position can be determined by moving the receiving workpiece angular position in parallel along each axis by the clearances $\Delta$Xtc, $\Delta$Ytc, and $\Delta$Ztc.

<D. Rx/Ry/Z Calibration Process>

Next, the processing contents of the Rx/Ry/Z calibration process (step S1) in Fig. 5 will be described.

(d1: Basic Idea)

In the Rx/Ry/Z calibration process, the angle Rx and the angle Ry at which first workpiece 50 and second workpiece 60 are in a surface-aligned state are searched for. The "surface-aligned state" means a state in which one surface and the other surface are parallel to each other. In robot system 1 illustrated in Fig. 1, a state in which tip end surface 52 of first workpiece 50 and a surface (hereinafter, also referred to as "receiving surface 64") of second workpiece 60 that receives first workpiece 50 are parallel to each other is the surface-aligned state.

In the Rx/Ry/Z calibration process, as an example, the surface-aligned state is searched for by using the position information regarding the Zt axis.

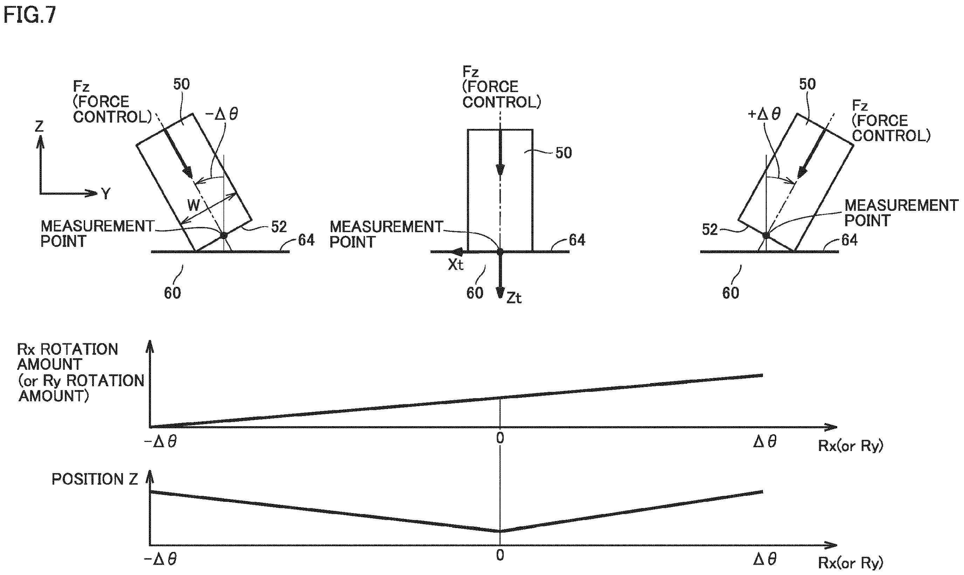

Fig. 7 is a diagram for describing the processing contents of the Rx/Ry/Z calibration process according to the present embodiment. Referring to Fig. 7, controller 100 performs force control about the Zt axis. More specifically, controller 100 causes the robot to perform an operation of pressing first workpiece 50 gripped by gripping mechanism 20 against second workpiece 60 with a predetermined force.

In the force control, controller 100 adjusts the instructions for position Z such that a force Fz generated in a Zt-axis direction coincides with a target value. Controller 100 performs position control on position X on the Xt axis and position Y on the Yt axis. In this manner, controller 100 adjusts position X and position Y such that position X and position Y coincide with the respective target values (target position). The force control and the position control are performed based on an arbitrarily set TCP.

In a case where angle Rx around the Xt axis or angle Ry around the Yt axis is changed in the state where the force control and the position control are performed, the posture of first workpiece 50 with respect to second workpiece 60 is changed. That is, controller 100 causes the robot to perform an operation of changing the posture of first workpiece 50 with respect to second workpiece 60 in a state where first workpiece 50 is pressed against second workpiece 60. At this time, at least a part of tip end surface 52 of first workpiece 50 is kept in contact with receiving surface 64 of second workpiece 60 by the force control about the Zt axis.

Based on an evaluation index related to the distance between first workpiece 50 and second workpiece 60, controller 100 searches for the posture of first workpiece 50 in which tip end surface 52 (first surface) of first workpiece 50 to be in contact with second workpiece 60 and receiving surface 64 (second surface) of second workpiece 60 to be in contact with first workpiece 50 are parallel to each other (that is, surface-aligned).

The evaluation index may be calculated based on the measurement point set on tip end surface 52 of first workpiece 50. The measurement point is set in association with first workpiece 50. In this case, the evaluation index reflects the position information of the measurement point on the Zt axis.

In the surface-aligned state, position Z (robot coordinate system 2) of the measurement point has a minimum value. As illustrated in the graph of Fig. 7, in a case where a rotation amount of angle Rx or angle Ry is increased, position Z has the minimum value in the surface-aligned state. As the distance from the surface-aligned state is increased, first workpiece 50 is inclined, and the corner of tip end surface 52 of first workpiece 50 and second workpiece 60 come into contact with each other, so that position Z is increased.

That is, since position Z draws a V-shaped trajectory regarding angle Rx or angle Ry, it can be determined that angle Rx or angle Ry at which position Z has an extreme value (peak) or the minimum value is in the surface-aligned state. In this manner, controller 100 collects the change in position Z while changing angle Rx or angle Ry. Controller 100 determines a posture (angle Rx or angle Ry) in which position Z has an extreme value as the surface-aligned state.

The position of the measurement point on the Zt axis in the surface-aligned state can also be determined based on position Z in the surface-aligned state.

(d2: Setting Example of TCP and Measurement Point)

Next, a setting example of the TCP and the measurement point in the Rx/Ry/Z calibration process of Fig. 5 will be described.

Controller 100 controls robot 10 based on the position and the posture of the TCP. That is, the TCP is used to calculate a target value (position and posture) for controlling robot 10. The TCP and the measurement point may coincide with each other, or the measurement point may be set at a position different from the TCP.

In order to search for the surface-aligned state, it is advantageous that a change amount in position Z of the measurement point is large according to the change in the posture (angle Rx or angle Ry) of first workpiece 50. The change amount of first workpiece 50 in the Zt-axis direction depends on the position of the TCP, the width (length) of first workpiece 50 in an Xt-axis direction, and the width (length) of first workpiece 50 in a Yt-axis direction.

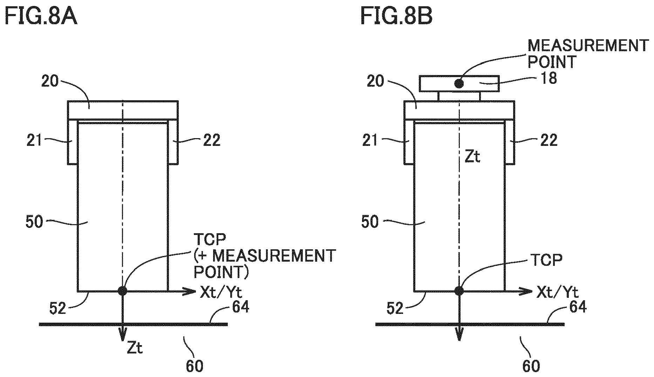

Figs. 8A and 8B are diagrams for describing a setting example of the TCP and the measurement point in the Rx/Ry/Z calibration process according to the present embodiment.

Fig. 8A illustrates a setting example in which the TCP and the measurement point coincide with each other. Referring to Fig. 8A, the TCP (and the measurement point) is set at the center of tip end surface 52 of first workpiece 50. In a case where tip end surface 52 of first workpiece 50 has a quadrangular shape, the TCP may be set at an intersection of a line connecting midpoints of two opposing sides and a line connecting midpoints of two other opposing sides, an intersection of two diagonal lines, a center of gravity of the quadrangular shape, or the like. Alternatively, the TCP and the measurement point may be set at an intersection of the Zt axis of tool coordinate system 30 and tip end surface 52 of first workpiece 50.

Fig. 8B illustrates an example in which the measurement point is set at a position different from the TCP. In the setting example illustrated in Fig. 8B, the TCP is set at the center of tip end surface 52 of first workpiece 50. At this time, the measurement point may be set at the position of force sensor 18.

The reference point (TCP) for controlling the position and the posture of robot 10 may be set inside tip end surface 52 of first workpiece 50. Furthermore, the TCP may be set at the center of tip end surface 52 of first workpiece 50, or may be set at the intersection of tip end surface 52 and the Zt axis.

The measurement point of first workpiece 50 may be set between the two outermost sides (opposite sides) of tip end surface 52 to be in contact with second workpiece 60 in a state where first workpiece 50 is inclined when the posture (angle Rx or angle Ry) of first workpiece 50 is changed. One outermost side is determined by inclining first workpiece 50 in one direction with respect to second workpiece 60, and the other outermost side is determined by inclining first workpiece 50 in the opposite direction with respect to second workpiece 60.

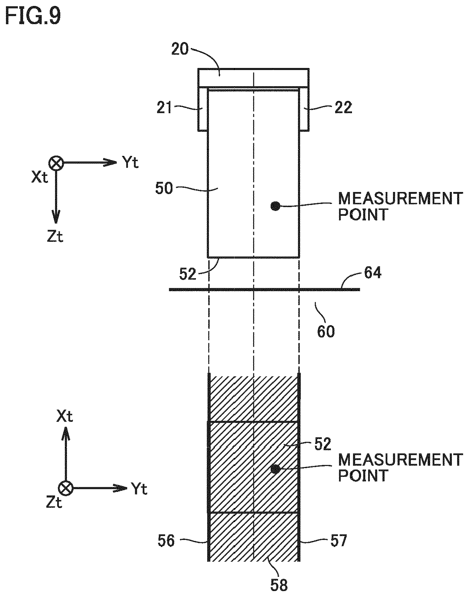

Fig. 9 is a diagram for describing a setting example of the measurement point in the Rx/Ry/Z calibration process according to the present embodiment.

Referring to Fig. 9, for example, in a case where first workpiece 50 is inclined by changing angle Rx, outermost sides 56 and 57 are two sides parallel to the Xt axis, and are defined at two positions on the Yt axis. In this case, as long as the measurement point is present between the two positions corresponding to outermost sides 56 and 57 on the Yt axis (settable range 58), the position on the Xt axis may be any position. That is, the measurement point may be set at a position where first workpiece 50 is not present as long as the measurement point is between the two outermost sides on the Yt axis.

On the other hand, for example, in a case where first workpiece 50 is inclined by changing angle Ry, the outermost sides are two sides parallel to the Yt axis, and are defined at two positions on the Xt axis. In this case, as long as the measurement point is present between the two positions corresponding to the outermost sides on the Xt axis, the position on the Yt axis may be any position. That is, the measurement point may be set at a position where first workpiece 50 is not present as long as the measurement point is between the two outermost sides on the Xt axis.

Furthermore, the position of the measurement point on the Zt axis may be any position. Therefore, the measurement point may be set at a position other than the position on tip end surface 52 of first workpiece 50.

In this manner, the measurement point may be set such that, when the measurement point is projected onto a surface including tip end surface 52, the projection position is present within a range defined by the two outermost sides of tip end surface 52 to be in contact with receiving surface 64 in the operation of changing the posture of first workpiece 50.

By setting the measurement point at such a position, it is possible to facilitate the detection of the extreme value in the process of searching for the surface-aligned state.

(d3: Evaluation Index)

Next, an evaluation index for searching for the surface-aligned state will be described.

In Fig. 5 described above, position Z of the measurement point is exemplified as the evaluation index for searching for the surface-aligned state, but the present invention is not limited thereto, and other evaluation indices can be used.

For example, in a case where receiving surface 64 of second workpiece 60 is not parallel to any axis of robot coordinate system 2 (global coordinate system) or the like, the calculation of the distance from receiving surface 64 may be complicated. Therefore, after a receiving surface (design value) 66 is set for second workpiece 60, the distance (distance on the Zt axis) from receiving surface (design value) 66 may be used as the evaluation index.

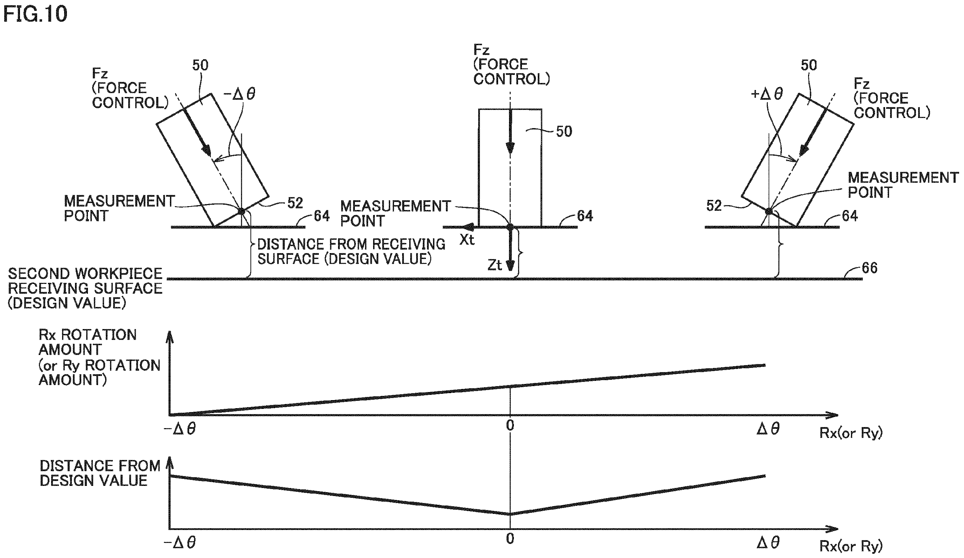

Fig. 10 is a diagram for describing processing contents in a case where the distance from receiving surface (design value) 66 is used as the evaluation index in the Rx/Ry/Z calibration process according to the present embodiment. Controller 100 performs force control about the Zt axis.

Referring to Fig. 10, since the distance from receiving surface (design value) 66 draws a V-shaped trajectory regarding angle Rx or angle Ry, it can be determined that angle Rx or angle Ry at which the distance from receiving surface (design value) 66 becomes an extreme value is in the surface-aligned state. The position on the Zt axis in the surface-aligned state can also be determined based on position Z in the surface-aligned state.

In this manner, the evaluation index may be a distance from receiving surface (design value) 66 set in advance in second workpiece 60 to the measurement point set in tool coordinate system 30 with the arm tip end of robot 10 as a reference. That is, the evaluation index may be a distance between receiving surface 64 of second workpiece 60 and the measurement point set in robot 10 in a direction perpendicular to receiving surface 64.

In a case where position Z of the measurement point illustrated in Fig. 7 and the distance from receiving surface (design value) 66 illustrated in Fig. 10 are used as evaluation indices, the surface-aligned state is searched for from the position information about the Zt axis, so that the influence caused by the fluctuation factor of the force control about the Zt axis can be reduced. In addition, in a case where the distance (distance on the Zt axis) from receiving surface (design value) 66 is used as the evaluation index, a value determined as the surface-aligned state can be directly used as the approach position.

In addition, in a case where the distance from receiving surface (design value) 66 is evaluated at the position on the Zt axis of tool coordinate system 30, the position change of the TCP can be evaluated as it is on the Zt axis without being converted into robot coordinate system 2. Therefore, even in a case where the arrangement posture of second workpiece 60 is changed, the algorithm for searching for the above-described surface-aligned state can be used as it is.

As another evaluation index for searching for the surface-aligned state, information regarding the force control about the Zt axis may be used.

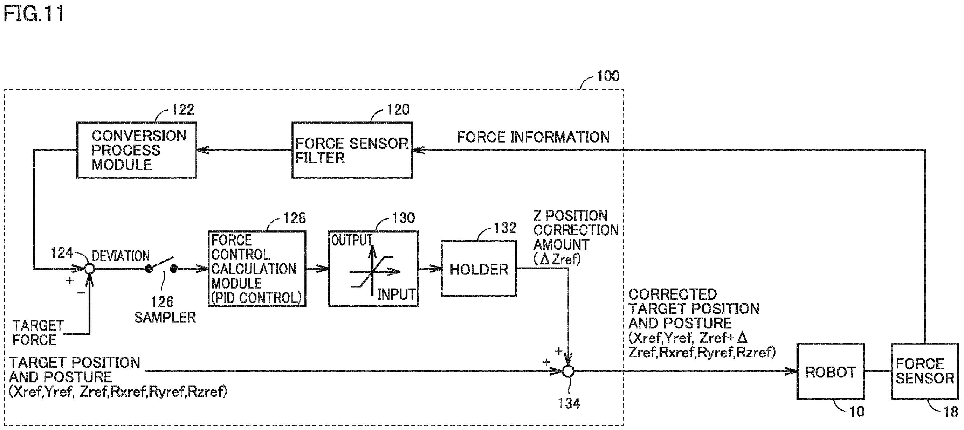

Fig. 11 is a schematic diagram illustrating an example of a control system that realizes the force control about the Zt axis according to the present embodiment. Referring to Fig. 11, controller 100 has a control system for pressing first workpiece 50 against second workpiece 60 with a predetermined force.

More specifically, controller 100 includes a force sensor filter 120, a conversion process module 122, a differentiator 124, a sampler 126, a force control calculation module 128, a limiter 130, a holder 132, and an adder 134.

Force sensor filter 120 filters and outputs force information from force sensor 18. The filtering reduces noise components included in the force information.

Conversion process module 122 calculates a force and a moment generated in a preset TCP based on the force information from force sensor filter 120. Conversion process module 122 outputs force Fz generated in the Zt-axis direction in the TCP.

Differentiator 124 calculates a deviation that is a difference between force Fz output from conversion process module 122 and a target value (target force) of a pressing force.

Sampler 126 samples the deviation output from differentiator 124, and inputs the sampled deviation to force control calculation module 128.

Force control calculation module 128 calculates an output value corresponding to the input deviation by PID calculation. The calculated output value corresponds to instructions for the position on the Zt axis given to robot 10.

Limiter 130 limits the value output from force control calculation module 128 to a predetermined upper and lower limit values and then outputs the value.

Force control calculation module 128 calculates an output value in response to discrete input of a value by sampler 126. Therefore, the value output from limiter 130 is also discrete. Even in a case where the output from limiter 130 is stopped, holder 132 continues to hold and output the value that is previously input. The value output from holder 132 is a Z position correction amount ($\Delta$Zref).

Adder 134 adds the Z position correction amount ($\Delta$Zref) to the target position and posture (Xref, Yref, Zref, Rxref, Ryref, Rzref) of the TCP to calculate final instructions. That is, adder 134 outputs the corrected target position and posture (Xref, Yref, Zref + ΔZref, Rxref, Ryref, Rzref).

The Z position correction amount illustrated in Fig. 11 may be used as the evaluation index. That is, the evaluation index may be a correction amount for instructions given to robot 10 output by the control system for pressing first workpiece 50 against second workpiece 60 with a predetermined force.

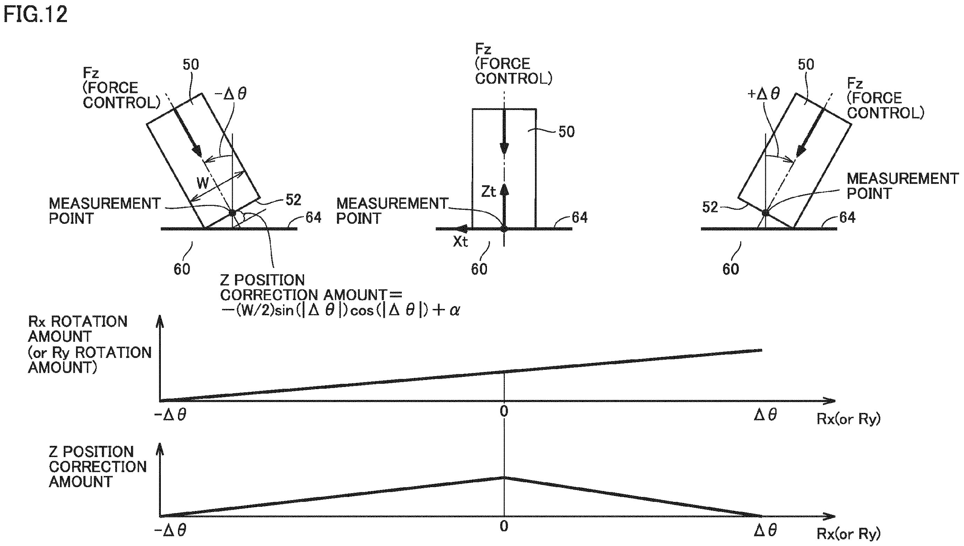

Fig. 12 is a diagram for describing processing contents in a case where the Z position correction amount is used as the evaluation index in the Rx/Ry/Z calibration process according to the present embodiment. Referring to Fig. 12, since the Z position correction amount draws a V-shaped trajectory regarding angle Rx or angle Ry, it can be determined that angle Rx or angle Ry at which the Z position correction amount becomes an extreme value is in the surface-aligned state. Position Z on the Zt axis in the surface-aligned state can also be determined based on position Z in the surface-aligned state.

As illustrated in Fig. 12, first workpiece 50 is inclined with respect to receiving surface 64 of second workpiece 60 unless first workpiece 50 and second workpiece 60 are in the surface-aligned state. The position of tip end surface 52 on the Zt axis is changed depending on an inclination angle θ. Therefore, the Z position correction amount depends on inclination angle θ.

In a case where a width (Xt-axis direction or Yt-axis direction) of tip end surface 52 of first workpiece 50 is W, the Z position correction amount can be expressed as follows.

$$\text{Z position correction amount} = -(W/2)\sin(|\Delta\theta|)\cos(|\Delta\theta|)$$

In this manner, the Z position correction amount depends on the square of a trigonometric function for angle θ. Therefore, by using the Z position correction amount, the surface-aligned state can be searched for with higher sensitivity as compared with a case of using the position information regarding the Zt axis.

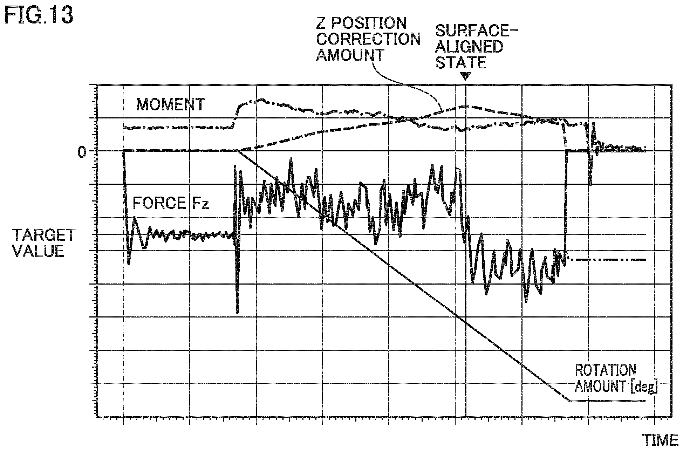

Fig. 13 is a diagram illustrating an example of a processing result in a case where the Z position correction amount is used as the evaluation index in the Rx/Ry/Z calibration process according to the present embodiment. Fig. 13 illustrates a measurement example in a case where angle Rx around the Xt axis (or angle Ry around Yt axis) is changed. Fig. 13 illustrates an example in which a process is started from a state inclined by about -2 [deg] from the surface-aligned state. A rotational speed of the angle is set to -0.2 [deg/s], and the target value of force Fz is set to -1 [N].

Fig. 13 illustrates temporal changes of the Z position correction amount, the moment around the axis, force Fz generated in the Zt-axis direction, and the rotation amount of the angle.

In Fig. 13, it can be determined that the angle at which the Z position correction amount becomes an extreme value is in the surface-aligned state. Although force Fz generated in the Zt-axis direction is greatly changed before and after the surface-aligned state, it is difficult to accurately detect the angle at which the surface-aligned state is obtained because relatively large noise is included. On the other hand, even in a case where force Fz is greatly changed, it can be said that the influence of the change is small in the Z position correction amount.

Since the change in the moment around the axis is decreased before and after the surface-aligned state, it is difficult to accurately detect the angle at which the surface-aligned state is obtained based on the moment around the axis. On the other hand, since the Z position correction amount indicates a relatively sharp peak in the surface-aligned state, the angle at which the surface-aligned state is obtained can be detected more accurately.

By using the Z position correction amount, it is not necessary to accurately calculate the position of the TCP on the Zt axis, and thus, it is possible to simplify the algorithm for searching for the surface-aligned state.

Note that, in a case where a cascade control system in which a force control loop for the Zt axis is provided outside a position control loop is adopted instead of the control system illustrated in Fig. 11, a position correction amount that is an operation amount of force control may be used as the evaluation index for searching for the surface-aligned state.

Even in a case where any of the evaluation indexes described above is used, the evaluation index has an extreme value (a maximal value or a minimal value, or a maximum value or a minimum value) in the surface-aligned state. Therefore, controller 100 determines the position and the posture at which the evaluation index has an extreme value, as the position and the posture of first workpiece 50 at which tip end surface 52 (first surface) of first workpiece 50 and receiving surface 64 (second surface) are parallel to each other (that is, surface-aligned).

(d4: Processing Procedure)

Next, a more detailed processing procedure of the Rx/Ry/Z calibration process will be described.

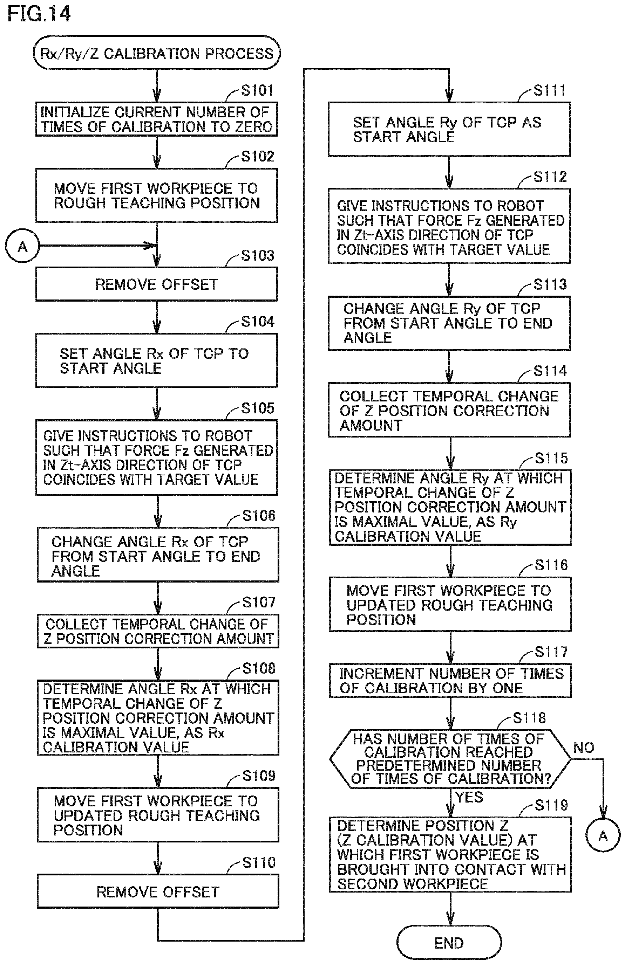

Fig. 14 is a flowchart illustrating a more detailed processing procedure of the Rx/Ry/Z calibration process according to the present embodiment. Each step illustrated in Fig. 14 may be realized by processor 102 of controller 100 executing system program 112 and/or control program 114.

In the Rx/Ry/Z calibration process, a set of a process of changing angle Rx around the Xt axis to determine an angle (hereinafter, also referred to as "Rx calibration value") at which the surface-aligned state is obtained and a process of changing angle Ry around the Yt axis to determine an angle (hereinafter, also referred to as "Ry calibration value") at which the surface-aligned state is obtained is repeated a predetermined number of times of calibration.

It is assumed that an initial position and an initial posture (hereinafter, also referred to as "rough teaching position") for starting the calibration process of the approach position are set in advance. The rough teaching position may be set by the user operating teaching pendant 26, or may be calculated in advance based on information on the size and the arrangement position of second workpiece 60.

Referring to Fig. 14, controller 100 initializes the current number of times of calibration to zero (step S101).

Controller 100 gives instructions to robot 10 to move first workpiece 50 to the rough teaching position (step S102). After completion of the movement, controller 100 removes the offset based on the force information output from force sensor 18 (step S103). Controller 100 sets the state in which first workpiece 50 is moved to the rough teaching position as an initial state, and calculates force Fz generated in the Zt-axis direction according to a change from the initial state. The process in step S103 corresponds to a process of removing the offset of the force information.

Controller 100 sets, as an initial value, the force information output from force sensor 18 in a state where first workpiece 50 and second workpiece 60 are not in contact with each other. Controller 100 detects the posture of first workpiece 50 after removing the offset of force sensor 18. Such removal of the offset is performed each time a search process is performed.

Controller 100 gives instructions to robot 10 to set angle Rx of the TCP as a start angle (step S104). For example, an angle of -11 [deg] with respect to angle Rx of the current rough teaching position may be set as the start angle.

Subsequently, controller 100 gives instructions to robot 10 such that force Fz generated in the Zt-axis direction of the TCP coincides with the target value (step S105). This force control is continued until the Rx calibration value is determined.

Controller 100 gives instructions to robot 10 to change angle Rx of the TCP from the start angle to an end angle (step S 106), and collects the temporal change of the Z position correction amount (step S107).

After angle Rx of the TCP is changed to the end angle, controller 100 determines angle Rx at which the collected Z position correction amount becomes the maximal value (or the maximum value; the same applies to the following process) as the Rx calibration value (step S108). Angle Rx of the rough teaching position is updated to the determined Rx calibration value.

Instead of changing angle Rx of the TCP to the end angle, the rotation around the Xt axis may be stopped after a predetermined time has elapsed from the time when the collected Z position correction amount becomes the maximal value.

The Rx calibration value is determined by the process of steps S103 to S108. Then, controller 100 gives instructions to robot 10 to move first workpiece 50 to the updated rough teaching position (step S109). Subsequently, the process of determining the Ry calibration value is started.

More specifically, controller 100 removes the offset based on the force information output from force sensor 18 (step S110). The process of step S110 corresponds to the process of removing the offset of the force information, similarly to the process of step S103.

Controller 100 gives instructions to robot 10 to set angle Ry of the TCP as the start angle (step S111). For example, an angle of -11 [deg] with respect to angle Ry of the current rough teaching position may be set as the start angle.

Subsequently, controller 100 gives instructions to robot 10 such that force Fz generated in the Zt-axis direction of the TCP coincides with the target value (step S1 12). This force control is continued until the Ry calibration value is determined.

Controller 100 gives instructions to robot 10 to change angle Ry of the TCP from the start angle to the end angle (step S113), and collects the temporal change of the Z position correction amount (step S114).

After angle Ry of the TCP is changed to the end angle, controller 100 determines angle Ry at which the collected Z position correction amount becomes the maximal value as the Ry calibration value (step S115). Angle Ry of the rough teaching position is updated to the determined Ry calibration value.

Instead of changing angle Ry of the TCP to the end angle, the rotation around the Yt axis may be stopped after a predetermined time has elapsed from the time when the collected Z position correction amount becomes the maximal value.

The Ry calibration value is determined by the process of steps S110 to S115. Then, controller 100 gives instructions to robot 10 to move first workpiece 50 to the updated rough teaching position (step S116).

Controller 100 increments the number of times of calibration by one (step S117), and determines whether or not the incremented number of times of calibration has reached a predetermined number of times of calibration (step S118). In a case where the incremented number of times of calibration has not reached the predetermined number of times of calibration (NO in step S118), the process in step S103 and subsequent steps is repeated.

In a case where the incremented number of times of calibration has reached the predetermined number of times of calibration (YES in step S118), controller 100 determines position Z (hereinafter, also referred to as "Z calibration value") at which first workpiece 50 is brought into contact with second workpiece 60 (step S119), and the Rx/Ry/Z calibration process ends.

(d5: Operation Example of Rx/Ry/Z Calibration Process)

Next, an operation example of the Rx/Ry/Z calibration process will be described.

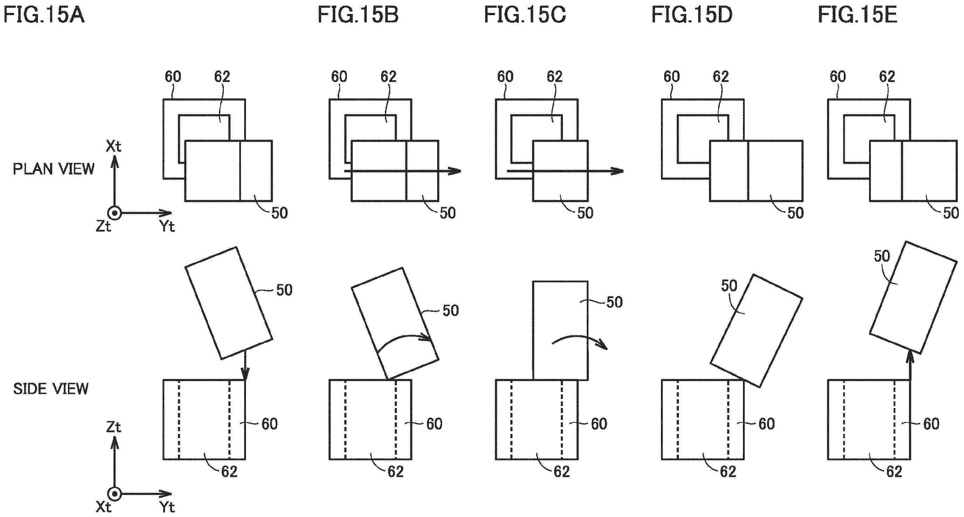

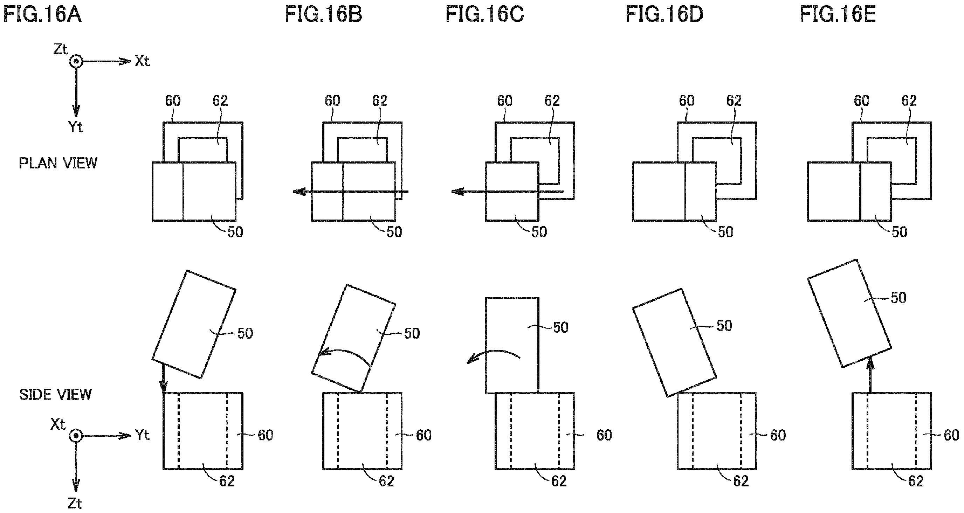

Figs. 15A to 15E are diagrams for describing operation examples in a case of determining the Z calibration value in the Rx/Ry/Z calibration process according to the present embodiment. Figs. 16A to 16E are diagrams for describing operation examples in a case of determining the Ry calibration value in the Rx/Ry/Z calibration process according to the present embodiment.

As illustrated in the processing procedure of Fig. 14, since angle Rx and angle Ry cannot be calibrated simultaneously, angle Rx and angle Ry are calibrated one by one in order. Note that a sensor error can be reduced by repeating the calibration of angle Rx and angle Ry a plurality of times.

Referring to Figs. 15A to 15E, controller 100 moves first workpiece 50 to the rough teaching position, and removes the offset of the force information output from force sensor 18 (Fig. 15A: steps S102 and S103 in Fig. 14).

Subsequently, controller 100 sets angle Rx of the TCP as the start angle (Fig. 15B: step S104 in Fig. 14). For example, the start angle may be -11 [deg] with respect to angle Rx of the rough teaching position.

Subsequently, controller 100 moves (lowers) first workpiece 50 in the Zt-axis direction, and stops the movement when force Fz generated in the Zt-axis direction becomes the target value (Fig. 15C: step S105 in Fig. 14). That is, controller 100 presses first workpiece 50 against second workpiece 60. For example, a movement speed in the Zt-axis direction may be 1 [mm/s], or the target value of force Fz may be - 3.5 [N].

Subsequently, controller 100 changes angle Rx of the TCP from the start angle to the end angle while performing the force control in the Zt-axis direction (Fig. 15D: step S106 in Fig. 14). That is, controller 100 searches for angle Rx at which the surface-aligned state is obtained. For example, the rotational speed (change speed) of angle Rx may be 0.4 [deg/s]. Angle Rx at which the Z position correction amount becomes the maximal value is the Rx calibration value.

In a case where angle Rx has reached the end angle, controller 100 stops the rotation around the Xt axis (step S106 in Fig. 14). Note that the rotation around the Xt axis may be stopped after a predetermined time has elapsed from the time when the Z position correction amount becomes the maximal value.

Finally, controller 100 updates angle Rx of the rough teaching position to the Rx calibration value, and moves first workpiece 50 to the updated rough teaching position (Fig. 15E: steps S108 and S109 in Fig. 14).

Referring to Figs. 16A to 16E, controller 100 moves first workpiece 50 to the updated rough teaching position, and removes the offset of the force information output from force sensor 18 (Fig. 16A: steps S109 and S110 in Fig. 14).

Subsequently, controller 100 sets angle Ry of the TCP as the start angle (Fig. 16B: step S111 in Fig. 14). For example, the start angle may be -11 [deg] with respect to angle Ry of the rough teaching position.

Subsequently, controller 100 moves (lowers) first workpiece 50 in the Zt-axis direction, and stops the movement when force Fz generated in the Zt-axis direction becomes the target value (Fig. 16C: step S112 in Fig. 14). That is, controller 100 presses first workpiece 50 against second workpiece 60. For example, the movement speed in the Zt-axis direction may be 1 [mm/s], or the target value of force Fz may be - 3.5 [N].

Subsequently, controller 100 changes angle Rx of the TCP from the start angle to the end angle while performing the force control in the Zt-axis direction (Fig. 16D: step S113 in Fig. 14). That is, controller 100 searches for angle Ry at which the surface-aligned state is obtained. For example, the rotational speed (change speed) of angle Ry may be 0.4 [deg/s]. Angle Ry at which the Z position correction amount becomes the maximal value is the Ry calibration value.

In a case where angle Ry has reached the end angle, controller 100 stops the rotation around the Yt axis (step S113 in Fig. 14). Note that the rotation around the Yt axis may be stopped after a predetermined time has elapsed from the time when the Z position correction amount becomes the maximal value.

Finally, controller 100 updates angle Ry of the rough teaching position to the Ry calibration value, and moves first workpiece 50 to the updated rough teaching position (Fig. 16E: steps S115 and S116 in Fig. 14).

(d6: Temporal Change in Z Position Correction Amount)

Next, a temporal change of the Z position correction amount, which is an example of the evaluation index for searching for the surface-aligned state, will be described.

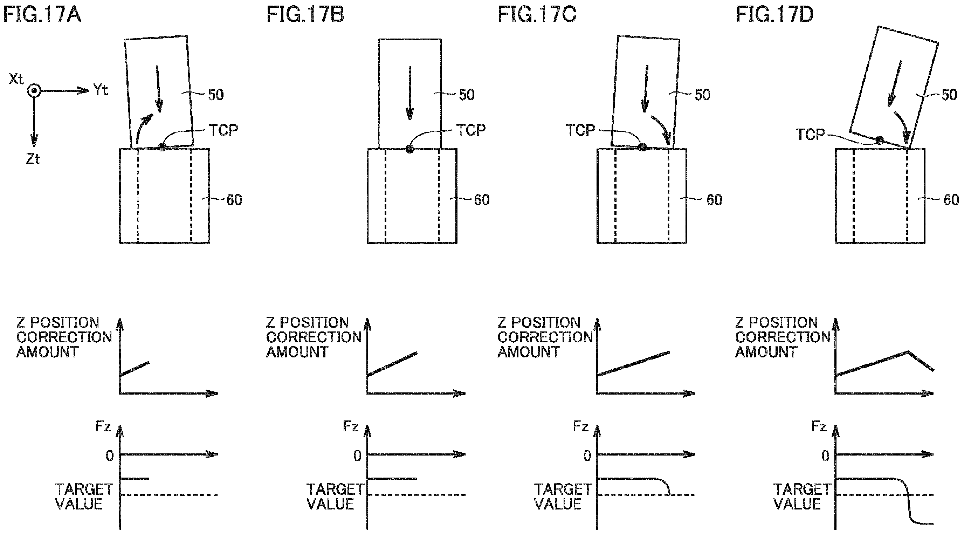

Figs. 17A to 17D are diagrams for describing the temporal change of the Z position correction amount in the Rx/Ry/Z calibration process according to the present embodiment. For convenience of description, in Figs. 17A to 17D, the positional relationship between first workpiece 50 and second workpiece 60 is emphasized, and does not necessarily coincide with the actual behavior of the workpiece.

Referring to Fig. 17A, in the initial state of the Rx/Ry/Z calibration process (state in which angle Rx of the TCP is the start angle), a left end point of first workpiece 50 is in contact with second workpiece 60. In this state, since the contact point is moved by the rotation of first workpiece 50, force Fz that is the pressing force has not reached the target value. Therefore, in order to make force Fz coincide with the target value, the Z position correction amount is increased.

Thereafter, as illustrated in Fig. 17B, even at a timing when first workpiece 50 and second workpiece 60 are in the surface-aligned state, the contact between first workpiece 50 and second workpiece 60 is insufficient, and force Fz has not reached the target value. Therefore, in order to make force Fz coincide with the target value, the increase in the Z position correction amount is also continued.

Furthermore, as illustrated in Fig. 17C, in a case where first workpiece 50 is inclined beyond the surface-aligned state, first workpiece 50 and second workpiece 60 are further brought into contact with each other, so that force Fz approaches the target value. Therefore, the increase in the Z position correction amount is also gentle.

Finally, as illustrated in Fig. 17D, in a state where a right end point of first workpiece 50 is in contact with second workpiece 60, the pressing force is stabilized.

As described above, a timing at which force Fz coincides with the target value can be delayed with respect to a timing at which first workpiece 50 and second workpiece 60 are in the surface-aligned state. However, a delay time of the timing is considered to be substantially the same between a case where first workpiece 50 is rotated clockwise and a case where first workpiece 50 is rotated counterclockwise.

Therefore, the delay time of the timing can be canceled by averaging measurement results obtained by rotating first workpiece 50 in both directions. By reducing the influence of such a delay time, the accuracy of a calibration result can be improved. Therefore, as described below, a low-speed search may be adopted.

(d7: Search for Surface-Aligned State)

Fig. 14 illustrates a processing example in which a process of rotating first workpiece 50 around the Xt axis to determine the Rx calibration value and a process of rotating first workpiece 50 around the Yt axis to determine the Ry calibration value are alternately performed, but a process of determining the Rx calibration value and the Ry calibration value may be performed in two stages of a high-speed search and a low-speed search.

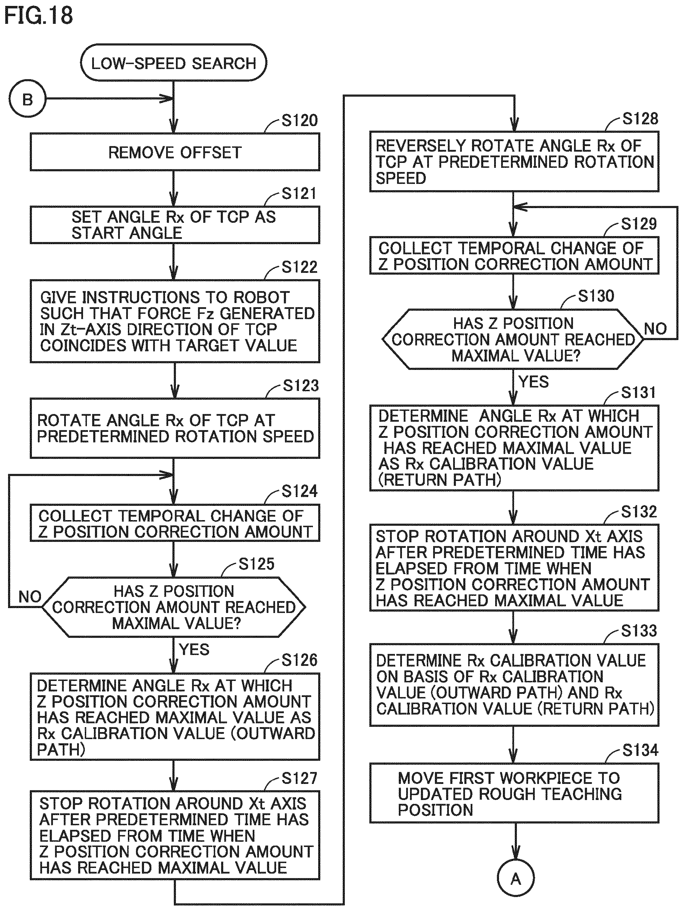

In the high-speed search illustrated in Fig. 14, a process of rotating first workpiece 50 in one direction around the Xt axis and a process of rotating first workpiece 50 in one direction around the Yt axis are repeatedly performed. On the other hand, in the low-speed search illustrated in Fig. 18, a process of rotating first workpiece 50 in both directions around the Xt axis and a process of rotating first workpiece 50 in both directions around the Yt axis are repeatedly performed. That is, the Rx calibration value and the Ry calibration value are determined by reciprocating rotation around each of the Xt axis and the Yt axis.

In the low-speed search, the operation of changing the posture of first workpiece 50 with respect to second workpiece 60 includes an operation (outward path) of rotating first workpiece 50 in the first direction (for example, clockwise) around an axis (Xt axis or Yt axis) orthogonal to a direction (Zt-axis direction) in which first workpiece 50 is pressed against second workpiece 60, and an operation of rotating first workpiece 50 in the second direction (for example, counterclockwise) that is an opposite direction to the first direction.

That is, in the low-speed search, the approach position (the Rx calibration value and/or the Ry calibration value) is updated by changing a rotation direction. More specifically, the approach position (the Rx calibration value and/or the Ry calibration value) is updated by rotating first workpiece 50 in the first direction to search for the posture to obtain the surface-aligned state and then rotating first workpiece 50 in the second direction to search for the posture to obtain the surface-aligned state.

Note that, in the low-speed search, the operation (outward path) of rotating first workpiece 50 in the first direction (for example, clockwise) and the operation of rotating first workpiece 50 in the second direction (for example, counterclockwise) that is the opposite direction to the first direction may be repeated a plurality of times.

In addition, in the low-speed search, the rotational speed (change speed) (absolute value) at which first workpiece 50 is rotated may be made smaller than the rotational speed in the high-speed search. That is, in the low-speed search, the operation of changing the posture of first workpiece 50 with respect to second workpiece 60 may include an operation of changing the posture of first workpiece 50 with respect to second workpiece 60 at a first change speed and an operation of changing the posture of first workpiece 50 with respect to second workpiece 60 at a second change speed different from the first change speed. The absolute value of the second change speed may be set to be smaller than the absolute value of the first change speed.

In this manner, the change speed at which the posture of first workpiece 50 is changed may be varied according to the process of searching for the surface-aligned state. Typically, the change speed may be reduced as the number of times of searching for the surface-aligned state is increased.

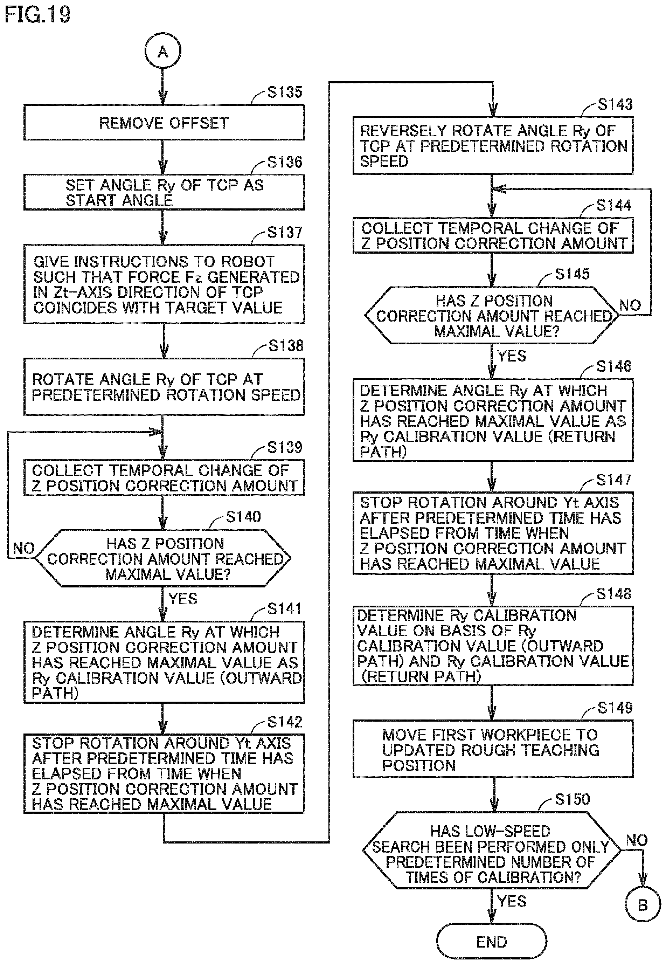

Figs. 18 and 19 are flowcharts illustrating the processing procedure of the low-speed search included in the Rx/Ry/Z calibration process according to the present embodiment. The process illustrated in Figs. 18 and 19 may be performed after execution of step S116 illustrated in Fig. 14 or after YES in step S118.

Referring to Fig. 18, controller 100 removes the offset based on the force information output from force sensor 18 (step S120). Note that first workpiece 50 is arranged at the updated rough teaching position.

Controller 100 gives instructions to robot 10 to set angle Rx of the TCP as a start angle (step S121). For example, an angle of -2.5 [deg] with respect to angle Rx of the current rough teaching position may be set as the start angle.

Subsequently, controller 100 gives instructions to robot 10 such that force Fz generated in the Zt-axis direction of the TCP coincides with the target value (step S122). This force control is continued until the Rx calibration value is determined.

Controller 100 gives instructions to robot 10 to rotate angle Rx of the TCP at a predetermined rotational speed (step S123), and collects the temporal change of the Z position correction amount (step S124). For example, the rotational speed (change speed) of angle Rx may be 0.28 [deg/s].

Controller 100 determines whether or not the Z position correction amount has reached the maximal value (step S125). In a case where the Z position correction amount has reached the maximal value (YES in step S125), controller 100 determines angle Rx at which the Z position correction amount has reached the maximal value as the Rx calibration value (outward path) (step S126).

After a predetermined time has elapsed from the time when the Z position correction amount has reached the maximal value, controller 100 gives instructions to robot 10 to stop the rotation around the Xt axis (step S127).

Controller 100 gives instructions to robot 10 to reversely rotate angle Rx of the TCP at a predetermined rotational speed (step S128), and collects the temporal change of the Z position correction amount (step S129). For example, the rotational speed (change speed) of angle Rx may be -0.28 [deg/s].

Controller 100 determines whether or not the Z position correction amount has reached the maximal value (step S130). In a case where the Z position correction amount has reached the maximal value (YES in step S130), controller 100 determines angle Rx at which the Z position correction amount has reached the maximal value as the Rx calibration value (return path) (step S131).

After a predetermined time has elapsed from the time when the Z position correction amount has reached the maximal value, controller 100 gives instructions to robot 10 to stop the rotation around the Xt axis (step S132).

Controller 100 determines the Rx calibration value based on the Rx calibration value (outward path) (step S126) and the Rx calibration value (return path) (step S131) (step S133). For example, an average of the Rx calibration value (outward path) and the Rx calibration value (return path) may be determined as the Rx calibration value. Angle Rx of the rough teaching position is updated to the determined Rx calibration value.

In this manner, controller 100 determines an average of a first posture of first workpiece 50 determined by rotating first workpiece 50 in the first direction and a second posture of first workpiece 50 determined by rotating first workpiece 50 in the second direction, as the posture of first workpiece 50 in which tip end surface 52 of first workpiece 50 and receiving surface 64 of second workpiece 60 are parallel to each other. That is, in a reciprocating operation, it may be determined whether or not the surface-aligned state is obtained, and the average of the posture of first workpiece 50 determined in the outward path and the posture of first workpiece 50 determined in the return path may be determined as the posture corresponding to the surface-aligned state.

By the process of steps S120 to S133, the Rx calibration value by the low-speed search is determined. Then, controller 100 gives instructions to robot 10 to move first workpiece 50 to the updated rough teaching position (step S134).

Referring to Fig. 19, controller 100 removes the offset based on the force information output from force sensor 18 (step S135).

Controller 100 gives instructions to robot 10 to set angle Ry of the TCP as the start angle (step S136). For example, an angle of -2.5 [deg] with respect to angle Ry of the current rough teaching position may be set as the start angle.

Subsequently, controller 100 gives instructions to robot 10 such that force Fz generated in the Zt-axis direction of the TCP coincides with the target value (step S137). This force control is continued until the Ry calibration value is determined.

Controller 100 gives instructions to robot 10 to rotate angle Ry of the TCP at a predetermined rotational speed (step S138), and collects the temporal change of the Z position correction amount (step S139). For example, the rotational speed (change speed) of angle Ry may be 0.28 [deg/s].

Controller 100 determines whether or not the Z position correction amount has reached the maximal value (step S140). In a case where the Z position correction amount has reached the maximal value (YES in step S140), controller 100 determines angle Ry at which the Z position correction amount has reached the maximal value as the Ry calibration value (outward path) (step S141).

After a predetermined time has elapsed from the time when the Z position correction amount has reached the maximal value, controller 100 gives instructions to robot 10 to stop the rotation around the Yt axis (step S142).

Controller 100 gives instructions to robot 10 to reversely rotate angle Ry of the TCP at a predetermined rotational speed (step S143), and collects the temporal change of the Z position correction amount (step S144). For example, the rotational speed (change speed) of angle Ry may be -0.28 [deg/s].

Controller 100 determines whether or not the Z position correction amount has reached the maximal value (step S145). In a case where the Z position correction amount has reached the maximal value (YES in step S 145), controller 100 determines angle Ry at which the Z position correction amount has reached the maximal value as the Ry calibration value (return path) (step S146).

After a predetermined time has elapsed from the time when the Z position correction amount has reached the maximal value, controller 100 gives instructions to robot 10 to stop the rotation around the Yt axis (step S147).

Controller 100 determines the Ry calibration value based on the Ry calibration value (outward path) (step S141) and the Ry calibration value (return path) (step S146) (step S148). For example, an average of the Ry calibration value (outward path) and the Ry calibration value (return path) may be determined as the Ry calibration value. Angle Ry of the rough teaching position is updated to the determined Ry calibration value.

In this manner, controller 100 determines an average of the first posture of first workpiece 50 determined by rotating first workpiece 50 in the first direction and the second posture of first workpiece 50 determined by rotating first workpiece 50 in the second direction, as the posture of first workpiece 50 in which tip end surface 52 of first workpiece 50 and receiving surface 64 of second workpiece 60 are parallel to each other.

By the process of steps S135 to S 148, the Ry calibration value by the low-speed search is determined. Then, controller 100 gives instructions to robot 10 to move first workpiece 50 to the updated rough teaching position (step S149).

Controller 100 determines whether or not the low-speed search has been performed only a predetermined number of times of calibration (step S 150). In a case where the low-speed search has not been performed up to the predetermined number of times of calibration (NO in step S150), the process in step S 120 and subsequent steps is repeated.

In a case where the low-speed search has been performed up to the predetermined number of times of calibration (YES in step S 150), the low-speed search ends.

As described above, the approach position corresponding to the surface-aligned state may be determined in two stages of the high-speed search as the one-way search and the low-speed search as the reciprocating search.

In the calibration process of the approach position in which the high-speed search and the low-speed search are combined, controller 100 determines the posture of first workpiece 50 in which tip end surface 52 of first workpiece 50 and receiving surface 64 of second workpiece 60 are parallel to each other, based on the result of the search obtained by rotating first workpiece 50 only in the first direction (for example, clockwise) around the axis (Xt axis or Yt axis) orthogonal to the direction (Zt-axis direction) in which first workpiece 50 is pressed against second workpiece 60. Subsequently, controller 100 updates the posture of first workpiece 50 in which tip end surface 52 of first workpiece 50 and receiving surface 64 of second workpiece 60 are parallel to each other, based on the result of the search obtained by rotating first workpiece 50 in the first direction and the result of the search obtained by rotating first workpiece 50 in the second direction.

Note that controller 100 rotates first workpiece 50 at the first change speed in a case of rotating first workpiece 50 only in the first direction, and rotates first workpiece 50 at the second change speed smaller than the first change speed in a case of rotating first workpiece 50 in the first direction and the second direction.

(d8: Decision Process of Z Calibration Value at Which First Workpiece 50 Is Brought into Contact with Second Workpiece 60)

Next, the process of determining the Z calibration value at which first workpiece 50 is brought into contact with second workpiece 60 (step S119 in Fig. 14) will be described.

In the process of determining the Rx calibration value and the process of determining the Ry calibration value, position Z when angle Rx and/or angle Ry is adopted as the Rx calibration value and/or the Ry calibration value may be acquired as the Z calibration value. Note that since the Z calibration value is acquired a plurality of times, an average or the like may be adopted.

Alternatively, after the Rx calibration value and the Ry calibration value are determined, position Z (Z calibration value) at which first workpiece 50 is brought into contact with second workpiece 60 may be searched for again.

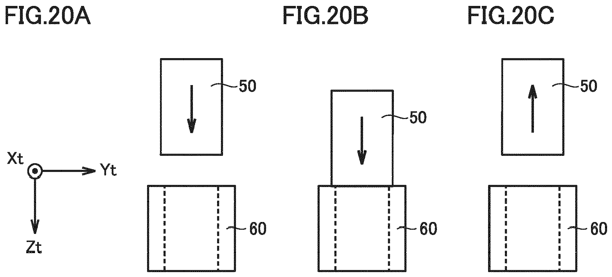

Figs. 20A to 20C are diagrams for describing the process of determining the Z calibration value in the Rx/Ry/Z calibration process according to the present embodiment. Referring to Fig. 20A, the offset is removed (offset removal) based on the force information output from force sensor 18 in a state where first workpiece 50 is arranged at the updated rough teaching position. Then, controller 100 moves (lowers) first workpiece 50 in the Zt-axis direction.

Referring to Fig. 20B, in a case where force Fz generated in the Zt-axis direction has reached the target value, position Z at the timing is determined as the Z calibration value at which first workpiece 50 is brought into contact with second workpiece 60. The determined Z calibration value indicates the position of a contact surface (receiving surface 64) of second workpiece 60. The Z calibration value corresponds to the height of a workpiece surface. Thereafter, referring to Fig. 20C, first workpiece 50 is moved (raised) in the Zt-axis direction by a predetermined approach distance.

By the process described above, position Z (Z calibration value) at which first workpiece 50 is brought into contact with second workpiece 60 can be determined.

(d9: Modification Example)

In the Rx/Ry/Z calibration process described above, angle Rx (Rx calibration value) around the Xt axis, angle Ry (Ry calibration value) around the Yt axis, and position Z (Z calibration value) on the Zt axis are determined, but only some calibration values may be determined.

For example, in a case where the positional relationship is fixed for one of the Xt axis and the Yt axis, the surface-aligned state is searched only for the movable axis. Therefore, only one of the process of determining the Rx calibration value (steps S 103 to S108 in Fig. 14) and the process of determining the Ry calibration value (steps S 110 to S 115 in Fig. 14) may be performed one or more times.

Alternatively, even in a case where a value is determined in advance for one of angle Rx around the Xt axis and angle Ry around the Yt axis, only one of the process of determining the Rx calibration value and the process of determining the Ry calibration value may be performed one or more times.

Alternatively, one of angle Rx around the Xt axis and angle Ry around the Yt axis may be determined by the user operating teaching pendant 26.

In addition, a predetermined design value may be used for position Z (Z calibration value) at which first workpiece 50 is brought into contact with second workpiece 60. In this case, the process in step S 119 in Fig. 14 can be omitted.

Furthermore, after angle Rx around the Xt axis and/or angle Ry around the Yt axis is determined by the Rx/Ry/Z calibration process, the user may operate teaching pendant 26 to bring first workpiece 50 and second workpiece 60 into contact with each other, thereby determining the Z calibration value.

As described above, performing only a part of the process included in the Rx/Ry/Z calibration process is also included in the technical scope of the present invention.

(d10: Summary)

In the decision of the approach position, in a case where angle Rx and/or angle Ry is not correctly calibrated, first workpiece 50 and second workpiece 60 cannot be sufficiently fitted, and thus there is a possibility that first workpiece 50 cannot be inserted into second workpiece 60. In addition, in a case where angle Rx and/or angle Ry is not appropriately calibrated, there is a possibility that it is erroneously detected that first workpiece 50 and second workpiece 60 are fitted due to the deflection generated in robot 10 although position X, position Y, and angle Rz do not match between first workpiece 50 and second workpiece 60.

In addition, in the decision of the approach position, in a case where receiving surface 64 of second workpiece 60 is not correctly calibrated at position Z, there is a possibility that first workpiece 50 is excessively inserted and the workpieces interfere with each other. In a case where the clearance is narrow, there is a possibility that first workpiece 50 cannot be inserted into second workpiece 60.

The Rx/Ry/Z calibration process suppresses occurrence of such interference between workpieces and erroneous detection of the fitting state.

As described above, in the Rx/Ry/Z calibration process, the surface-aligned state is determined based on the evaluation index, and angle Rx, angle Ry, and position Z are calibrated. In the Rx/Ry/Z calibration process, the posture of first workpiece 50 is changed while keeping the state in which first workpiece 50 is pressed against second workpiece 60 by the force control. Then, based on the position change of first workpiece 50 in a pressing direction or a relative distance between first workpiece 50 and second workpiece 60, the surface-aligned state between first workpiece 50 and second workpiece 60 is determined, and at least one of angle Rx, angle Ry, and position Z of the approach position is determined.

As the evaluation index, in addition to the height in the robot coordinate system, a Z position correction amount calculated in the force control may be used. In a case where the Z position correction amount is used as the evaluation index, a timing at which the Z position correction amount has reached the maximal value (or the maximum value) is searched for. By using the Z position correction amount, coordinate transformation in consideration of the posture of second workpiece 60 for obtaining the height in the Zt-axis direction becomes unnecessary.

According to the present embodiment, the time required for teaching can be reduced by optimizing the approach position from the rough teaching position by the calibration process of the approach position. By optimizing the approach position, even in a case where an arrangement error occurs between first workpiece 50 and second workpiece 60 in actual operation, the time required for the search operation can be shortened.

Since the position information of first workpiece 50 is used in the determination of the surface-aligned state, it is difficult to be affected by fluctuation factors of force such as the offset and hysteresis of force sensor 18, the magnitude of the target value (target force) of the force control, and the magnitude of the rotational speed (change speed), and the calibration accuracy can be improved.

<E. X/Y/Rz Calibration Process>

Next, the processing contents of the X/Y/Rz calibration process (step S2) in Fig. 5 will be described.

(e1: Basic Idea)

In the X/Y/Rz calibration process, two direction vectors defining the inner surface of fitting hole 62 of second workpiece 60 are determined, and the position (coordinates) of the XtYt origin indicating the corner of fitting hole 62 is determined from the two direction vectors. More specifically, a first direction vector corresponding to the first surface and a second direction vector corresponding to the second surface are determined by moving first workpiece 50 on Xt-Yt coordinates while first workpiece 50 is in contact with two adjacent inner surfaces (hereinafter, also referred to as "first surface" and "second surface") of fitting hole 62. Each of the first direction vector and the second direction vector includes components of the Xt axis and the Yt axis.

In this manner, in the X/Y/Rz calibration process, position X, position Y, and angle Rz are calibrated by calculating the direction vector corresponding to fitting hole 62 based on the position where first workpiece 50 and second workpiece 60 are in contact with each other. First workpiece 50 is inserted into fitting hole 62 while keeping the non-contact state with second workpiece 60 in a state of being inclined with respect to receiving surface 64 of second workpiece 60. Subsequently, the coordinates of the plurality of position measurement points are acquired by bringing first workpiece 50 into contact with one or a plurality of surfaces of receiving surface 64. The direction vector corresponding to each surface is calculated based on the acquired coordinates of the position measurement point.

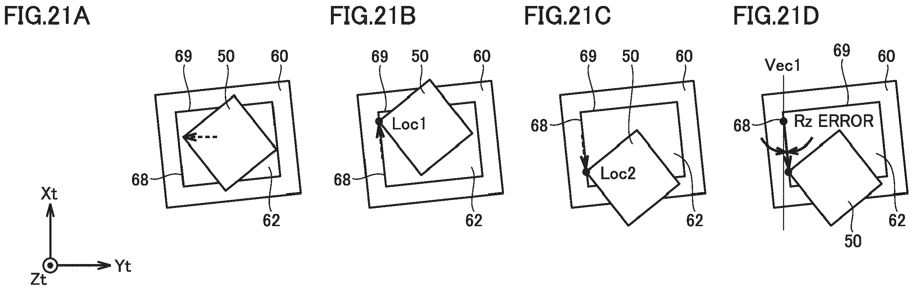

Figs. 21A to 21D are diagrams for describing a process of determining the first direction vector in the X/Y/Rz calibration process according to the present embodiment.

First, first workpiece 50 is arranged at a position on the Zt axis away from second workpiece 60 in the posture of the Rx calibration value and the Ry calibration value determined by the Rx/Ry/Z calibration process. In this state, the tip end surface 52 of first workpiece 50 and receiving surface 64 of second workpiece 60 are substantially parallel to each other. Subsequently, first workpiece 50 is inclined by a predetermined inclination angle from the Rx calibration value, and is inclined by a predetermined inclination angle from the Ry calibration value. The inclination angles with respect to the Xt axis and the Yt axis may be the same or different from each other.

As illustrated in Fig. 21A, first workpiece 50 is inserted into fitting hole 62 of second workpiece 60 in an inclined state. That is, controller 100 causes robot 10 to perform an operation of inserting first workpiece 50 gripped by gripping mechanism 20 into fitting hole 62 while keeping the non-contact state of first workpiece 50 with second workpiece 60. Note that the operation of inserting first workpiece 50 into fitting hole 62 of second workpiece 60 in the inclined state may be performed by the user operating teaching pendant 26.

Since first workpiece 50 is inclined, one corner of the tip end surface approaches a first surface 68 of fitting hole 62 of second workpiece 60. Controller 100 gives instructions to robot 10 to press one corner of first workpiece 50 against first surface 68 of fitting hole 62 (for example, 3 [N]).

Subsequently, as illustrated in Fig. 21B, controller 100 gives instructions to robot 10 to move first workpiece 50 along first surface 68 in a state where one corner of first workpiece 50 is pressed against first surface 68 of fitting hole 62.

When one corner of first workpiece 50 approaches a second surface 69, first workpiece 50 receives a reaction force from second surface 69. Upon receiving the reaction force from second surface 69, controller 100 acquires coordinates (components of the Xt axis and the Yt axis) indicating a position measurement point Loc1 (for example, 1 mm before) before the position where the reaction force is received.

Subsequently, as illustrated in Fig. 21C, controller 100 gives instructions to robot 10 to move first workpiece 50 along first surface 68 in a direction opposite to second surface 69 in a state where one corner of first workpiece 50 is pressed against first surface 68 of fitting hole 62.

When one corner of first workpiece 50 approaches a surface facing second surface 69, first workpiece 50 receives the reaction force. Upon receiving the reaction force, controller 100 acquires coordinates (components of the Xt axis and the Yt axis) indicating a position measurement point Loc2 (for example, 1 mm before) before the position where the reaction force is received.

In this manner, during the movement of first workpiece 50 along first surface 68, the coordinates of the position measurement points Loc1 and Loc2 located before the position, at which the reaction force exceeding a predetermined value is received, by a predetermined distance are acquired.

Subsequently, as illustrated in Fig. 21D, controller 100 calculates a first direction vector Vec1 (= Loc2 - Loc1) based on the position measurement point Loc1 and the position measurement point Loc2.

In this manner, controller 100 performs the operation of moving first workpiece 50 along first surface 68 while pressing first workpiece 50 against first surface 68 that is one inner surface of fitting hole 62. Then, controller 100 calculates first direction vector Vec1 corresponding to first surface 68 based on information on the movement of first workpiece 50 along first surface 68.

Angle Rz is corrected using an angle difference between the initially set direction of first surface 68 of fitting hole 62 and a direction indicated by calculated first direction vector Vec1, and corrected angle Rz is determined as an Rz calibration value. In this manner, controller 100 determines the Rz calibration value based on first direction vector Vec1. The Rz calibration value indicates a reference posture for fitting first workpiece 50 into fitting hole 62 of second workpiece 60. Note that the Rz calibration value can also be determined based on a second direction vector Vec2 to be described later.

Note that an angle formed by a reference direction of angle Rz and the direction indicated by first direction vector Vec1 may be determined as the Rz calibration value.

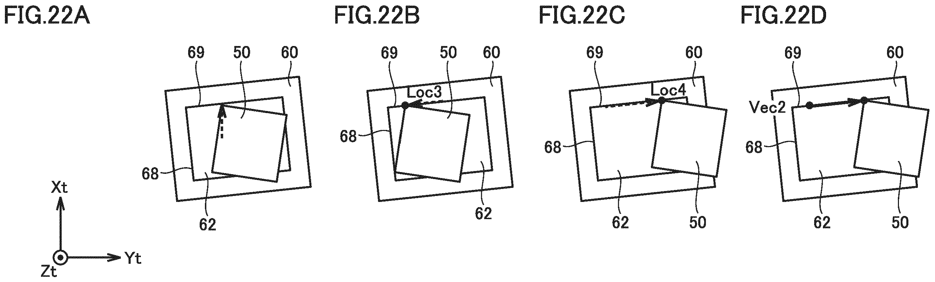

Figs. 22A to 22D are diagrams for describing a process of determining the second direction vector in the X/Y/Rz calibration process according to the present embodiment.

Next, as illustrated in Fig. 22A, first workpiece 50 is arranged at a position where one corner of the tip end surface approaches second surface 69 of fitting hole 62 of second workpiece 60.

Controller 100 gives instructions to robot 10 to press one corner of first workpiece 50 against second surface 69 of fitting hole 62 (for example, 3 [N]).

Subsequently, as illustrated in Fig. 22B, controller 100 gives instructions to robot 10 to move first workpiece 50 along second surface 69 in a state where one corner of first workpiece 50 is pressed against second surface 69 of fitting hole 62.

When one corner of first workpiece 50 approaches a surface facing first surface 68, first workpiece 50 receives the reaction force from the surface facing first surface 68. Upon receiving the reaction force from the surface facing first surface 68, controller 100 acquires coordinates (components of the Xt axis and the Yt axis) indicating a position measurement point Loc3 (for example, 1 mm before) before the position where the reaction force is received.

Subsequently, as illustrated in Fig. 22C, controller 100 gives instructions to robot 10 to move first workpiece 50 along second surface 69 in a direction of first surface 68 in a state where one corner of first workpiece 50 is pressed against second surface 69 of fitting hole 62.

When one corner of first workpiece 50 approaches first surface 68, first workpiece 50 receives the reaction force. Upon receiving the reaction force, controller 100 acquires coordinates (components of the Xt axis and the Yt axis) indicating a position measurement point Loc4 (for example, 1 mm before) before the position where the reaction force is received.

In this manner, during the movement of first workpiece 50 along second surface 69, the coordinates of the position measurement points Loc3 and Loc4 located before the position, at which the reaction force exceeding a predetermined value is received, by a predetermined distance are acquired.

Subsequently, as illustrated in Fig. 22D, controller 100 calculates the second direction vector Vec2 (= Loc4 - Loc3) based on the position measurement point Loc3 and the position measurement point Loc4.

In this manner, controller 100 performs the operation of moving first workpiece 50 along second surface 69 while pressing first workpiece 50 against second surface 69 that is an inner surface adjacent to first surface 68 of fitting hole 62. Then, controller 100 calculates second direction vector Vec2 corresponding to second surface 69 based on information on the movement of first workpiece 50 along second surface 69.

First direction vector Vec1 and second direction vector Vec2 can be calculated by the processes illustrated in Figs. 21A to 21D and Figs. 22A to 22D. That is, controller 100 calculates the XtYt origin based on first direction vector Vec1 and second direction vector Vec2. The XtYt origin is coordinates corresponding to a corner of fitting hole 62, and indicates a position reference for fitting first workpiece 50 into fitting hole 62 of second workpiece 60.

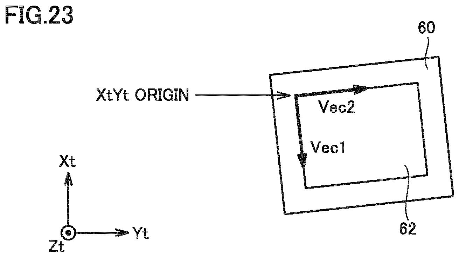

Fig. 23 is a diagram for describing a process of determining the XtYt origin in the X/Y/Rz calibration process according to the present embodiment. Referring to Fig. 23, controller 100 calculates an intersection between first direction vector Vec1 and second direction vector Vec2 on the Xt-Yt coordinates, and determines the calculated intersection as the XtYt origin.

That is, controller 100 determines position X on the Xt axis and position Y on the Yt axis indicating the intersection of first direction vector Vec1 and second direction vector Vec2, as the calibration values indicating the origin. The XtYt origin may be determined on an intersection line of a plane including first direction vector Vec1 and a plane including second direction vector Vec2. Hereinafter, position X of the XtYt origin is also referred to as "X calibration value", and position Y of the XtYt origin is also referred to as "Y calibration value".

As described above, controller 100 determines at least one of the position and the posture of first workpiece 50 for fitting first workpiece 50 into fitting hole 62 based on at least one of first direction vector Vec1 and second direction vector Vec2.

More specifically, controller 100 determines the Rz calibration value, which is the angle of the fitting hole, based on at least one of first direction vector Vec1 and second direction vector Vec2. Note that, after the Rz calibration value (provisional value) may be determined based on first direction vector Vec1 and the Rz calibration value (provisional value) may be determined based on second direction vector Vec2, the average of the plurality of determined Rz calibration values (provisional values) may be finally output as the Rz calibration value.

In addition, controller 100 may determine the XtYt origin, which is the position reference of fitting hole 62, based on first direction vector Vec1 and second direction vector Vec2.

(e2: Processing Procedure)

Next, a more detailed processing procedure of the X/Y/Rz calibration process will be described.

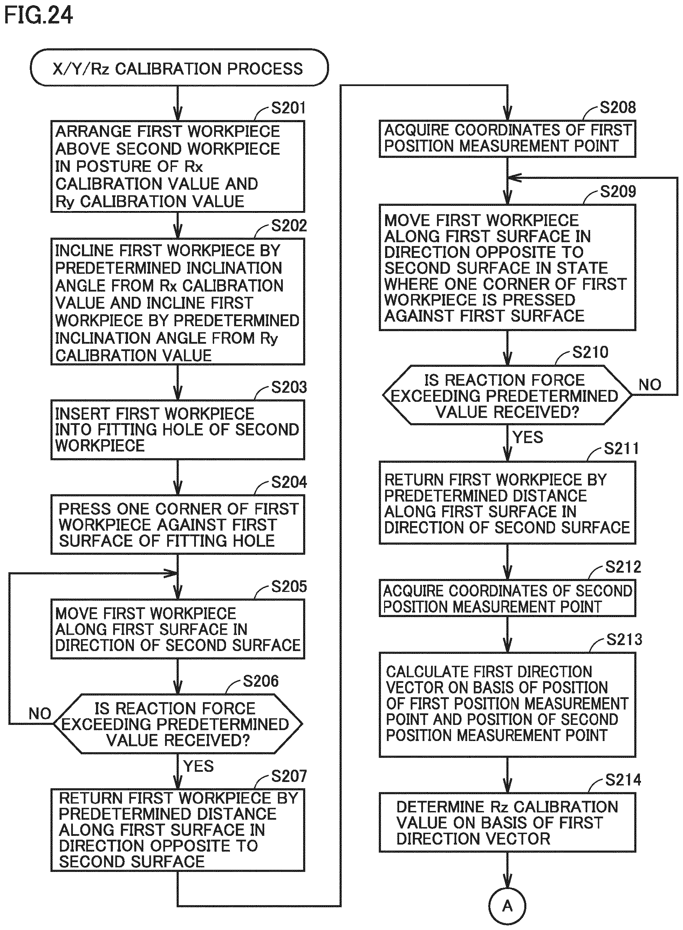

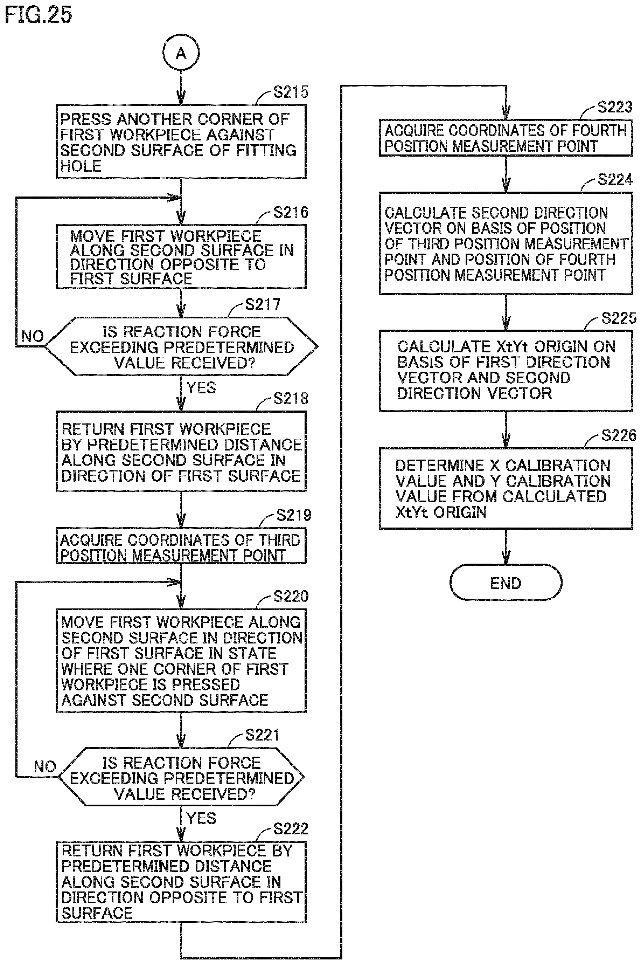

Figs. 24 and 25 are flowcharts illustrating a more detailed processing procedure of the X/Y/Rz calibration process according to the present embodiment. Each step illustrated in Figs. 24 and 25 may be realized by processor 102 of controller 100 executing system program 112 and/or control program 114.

Referring to Fig. 24, controller 100 gives instructions to robot 10 to arrange first workpiece 50 above second workpiece 60 in the posture of the Rx calibration value and the Ry calibration value (step S201). Subsequently, controller 100 gives instructions to robot 10 to incline first workpiece 50 by a predetermined inclination angle from the Rx calibration value and incline first workpiece 50 by a predetermined inclination angle from the Ry calibration value (step S202). Furthermore, controller 100 gives instructions to robot 10 to insert first workpiece 50 into fitting hole 62 of second workpiece 60 (step S203).

Subsequently, controller 100 gives instructions to robot 10 to press one corner of first workpiece 50 against first surface 68 of fitting hole 62 (step S204), and to move first workpiece 50 along first surface 68 in the direction of second surface 69 (step S205). Controller 100 determines whether or not a reaction force exceeding a predetermined value is received (step S206).

In a case where the reaction force exceeding the predetermined value is received (YES in step S206), controller 100 returns first workpiece 50 by a predetermined distance along first surface 68 in the direction opposite to second surface 69 (step S207), and acquires the coordinates of a first position measurement point using the returned position as the first position measurement point (step S208). Note that, in a case where the first position measurement point is determined, the force pressing one corner of first workpiece 50 against first surface 68 of fitting hole 62 may be reduced to a predetermined value (for example, 1 [N]) (details will be described later. The same applies to a case of determining other position measurement points).

Controller 100 gives instructions to robot 10 to move first workpiece 50 along first surface 68 in a direction opposite to second surface 69 in a state where one corner of first workpiece 50 is pressed against first surface 68 of fitting hole 62 (step S209). Controller 100 determines whether or not a reaction force exceeding a predetermined value is received (step S210).

In a case where the reaction force exceeding the predetermined value is received (YES in step S210), controller 100 returns first workpiece 50 by a predetermined distance along first surface 68 in the direction of second surface 69 (step S211), and acquires the coordinates of a second position measurement point using the returned position as the second position measurement point (step S212).

Controller 100 calculates first direction vector Vec1 based on the position of the first position measurement point and the position of the second position measurement point (step S213).

Controller 100 determines the Rz calibration value based on first direction vector Vec1 (step S214). That is, controller 100 corrects angle Rz using the angle difference between the initially set direction of first surface 68 of fitting hole 62 and the direction indicated by calculated first direction vector Vec1, and determines corrected angle Rz as the Rz calibration value.

Referring to Fig. 25, subsequently, controller 100 gives instructions to robot 10 to press another corner of first workpiece 50 against second surface 69 of fitting hole 62 (step S215), and to move first workpiece 50 along second surface 69 in a direction opposite to first surface 68 (step S216). Controller 100 determines whether or not a reaction force exceeding a predetermined value is received (step S217).

In a case where the reaction force exceeding the predetermined value is received (YES in step S217), controller 100 returns first workpiece 50 by a predetermined distance along second surface 69 in the direction of first surface 68 (step S218), and acquires the coordinates of a third position measurement point using the returned position as the third position measurement point (step S219).

Controller 100 gives instructions to robot 10 to move first workpiece 50 along second surface 69 in the direction of first surface 68 in a state where one corner of first workpiece 50 is pressed against second surface 69 of fitting hole 62 (step S220). Controller 100 determines whether or not a reaction force exceeding a predetermined value is received (step S221).

In a case where the reaction force exceeding the predetermined value is received (YES in step S221), controller 100 returns first workpiece 50 by a predetermined distance along second surface 69 in the direction opposite to first surface 68 (step S222), and acquires the coordinates of a fourth position measurement point using the returned position as the fourth position measurement point (step S223).

Controller 100 calculates second direction vector Vec2 based on the position of the third position measurement point and the position of the fourth position measurement point (step S224).

Controller 100 calculates the XtYt origin based on first direction vector Vec1 and second direction vector Vec2 (step S225), and determines the X calibration value and the Y calibration value from the calculated XtYt origin (step S226). Then, the process ends.

(e3: Improvement in Accuracy of Position Measurement)

Next, a modification example in which the position for calculating the direction vector is measured with higher accuracy will be described.

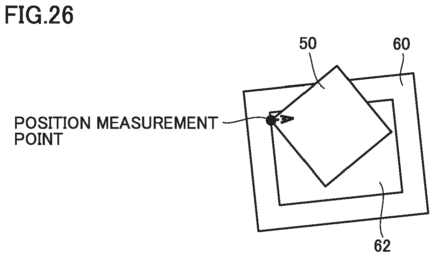

Fig. 26 is a diagram for describing an example of a position measurement method for calculating the direction vector in the X/Y/Rz calibration process according to the present embodiment.

Referring to Fig. 26, when one corner of first workpiece 50 is pressed against any surface of fitting hole 62, in a case where the target value of the force control is greater than or equal to a predetermined value (for example, 5 [N]), gripping mechanism 20 (refer to Fig. 1) and the like can be elastically deformed in the order of several 100 $\mu$m. Such elastic deformation may reduce the accuracy of the position to be measured.

For example, at the position measurement point at which the position is acquired, the target value of the force control may be lowered to a target value (for example, about 1 [N]) at which elastic deformation does not occur. Note that the target value is preferably a value having a predetermined margin with respect to the minimum value of the force detectable by the force information from force sensor 18. The measurement accuracy of the position can be improved by changing the target value of the force control.

In this manner, controller 100 causes robot 10 to perform an operation of reducing the pressing force of first workpiece 50 against first surface 68 at position measurement points Loc1 and Loc2, and to perform an operation of reducing the pressing force of first workpiece 50 against second surface 69 at position measurement points Loc3 and Loc4.

With such an operation, an error caused by elastic deformation that may occur in robot 10 can be reduced, and the calculation accuracy of the direction vector can be improved.

In addition, in a case where a certain degree of elastic deformation occurs, the corner of first workpiece 50 may be moved in a direction away from the surface against which the corner of first workpiece 50 has been pressed, after the force control is invalidated. In this case, first workpiece 50 may be moved until the reaction force detected by the force information from force sensor 18 is reduced to a predetermined value.

At this time, controller 100 causes robot 10 to stop pressing first workpiece 50 against first surface 68 at position measurement points Loc1 and Loc2 and to perform an operation of moving first workpiece 50 away from first surface 68 such that the reaction force generated by the contact of first workpiece 50 with first surface 68 becomes less than or equal to a predetermined value. Similarly, controller 100 causes robot 10 to stop pressing first workpiece 50 against second surface 69 at position measurement points Loc3 and Loc4 and to perform an operation of moving first workpiece 50 away from second surface 69 such that the reaction force generated by the contact of first workpiece 50 with second surface 69 becomes less than or equal to a predetermined value.

As described above, the measurement accuracy of the position can be improved by adjusting the position of the corner of first workpiece 50 with respect to any surface of fitting hole 62. As a result, an error caused by elastic deformation that may occur in robot 10 can be reduced, and the calculation accuracy of the direction vector can be improved.

(e4: Improvement in Calculation Accuracy of Direction Vector)

In the above description, the processing of calculating the direction vector from the two positions has been exemplified, but the present invention is not limited thereto, and the calculation accuracy of the direction vector may be improved by measuring more positions.

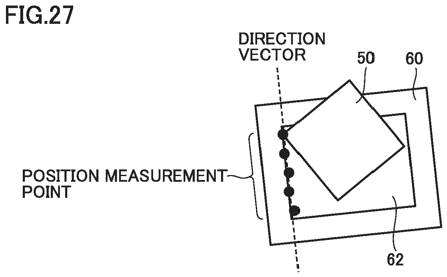

Fig. 27 is a diagram for describing a modification example of a process of calculating the direction vector in the X/Y/Rz calibration process according to the present embodiment.

Referring to Fig. 27, for example, by repeating the above-described measurement of the position a plurality of times, a plurality of positions can be acquired for the same surface. Alternatively, in a state where one corner of first workpiece 50 is pressed against any surface of fitting hole 62, when the corner is moved along the surface, a plurality of positions can be acquired by sequentially storing the positions indicating the trajectory.

The direction vector may be calculated by linearly approximating the plurality of acquired positions by a statistical method such as a least squares method. Note that when the statistical method is applied, in a case where outliers are included in the plurality of acquired positions, the direction vector may be calculated after excluding the outliers. Note that any statistical method may be used as long as the direction vector can be calculated.

In this manner, controller 100 calculates first direction vector Vec1 by performing interpolation based on the coordinates of the plurality of position measurement points acquired during the movement of first workpiece 50 along first surface 68. Similarly, controller 100 calculates second direction vector Vec2 by performing interpolation based on the coordinates of the plurality of position measurement points acquired during the movement of first workpiece 50 along second surface 69.

The direction vector can more accurately be calculated by a statistical process using the coordinates of the plurality of position measurement points.

(e5: Modification Example)

In the X/Y/Rz calibration process described above, position X (X calibration value) of the XtYt origin, position Y (Y calibration value) of the XtYt origin, and the Rz calibration value are determined, but only some calibration values may be determined. For example, a predetermined design value may be adopted as the Rz calibration value. In this case, only the X calibration value and the Y calibration value may be determined. In addition, the Rz calibration value may be determined by the user operating teaching pendant 26.

In addition, in a case where the positional relationship is fixed for one side of second workpiece 60, the direction vector may be calculated only for the other side. In this case, the XtYt origin is calculated using two direction vectors, but information calculated in advance can be used for one direction vector.

As described above, performing only a part of the process included in the X/Y/Rz calibration process is also included in the technical scope of the present invention.

(e6: Summary)

In the decision of the approach position, in a case where brute-force search is performed, an appropriate position can be determined, but the time required for the search becomes excessive and is not suitable for actual operation. In addition, in the method of controlling and searching for the force and the moment of first workpiece 50, since a moment error due to the reaction force, an error due to the offset and hysteresis of force sensor 18, and the like occur, the calibration accuracy may be reduced.

In the X/Y/Rz calibration process, each of positions of a plurality of position measurement points is acquired for one surface, and the direction vector for the surface is calculated by interpolating the plurality of acquired positions. Angle Rz around the Zt axis is calibrated based on the calculated direction vector.

Since it is not necessary to use the moment information for the calibration of angle Rz, it is less likely to be affected by the moment error due to the reaction force, the offset and the hysteresis of force sensor 18, and the like, and thus the calibration accuracy can be improved.

<F. Other Embodiments>

As the calibration processing of the approach position, the processing example of performing the Rx/Ry/Z calibration process (step S 1) and the X/Y/Rz calibration process (step S2) has been described, but only the Rx/Ry/Z calibration process or only the X/Y/Rz calibration process may be performed.

For example, after the Rx calibration value and the Ry calibration value for bringing first workpiece 50 and second workpiece 60 into the surface-aligned state are determined by the Rx/Ry/Z calibration process, the user may operate teaching pendant 26 to determine other values.

In addition, after both the Rx calibration value and the Ry calibration value are set to initial values (for example, 0°), the X/Y/Rz calibration process may be performed to determine the XtYt origin.

Furthermore, as described above, only some calibration values may be determined by the Rx/Ry/Z calibration process, or only some calibration values may be determined by the X/Y/Rz calibration process.

In this manner, the technical scope of the present invention includes a process of determining at least one of the X calibration value, the Y calibration value, the Z calibration value, the Rx calibration value, the Ry calibration value, and the Rz calibration value.

<G. Advantages>

According to the present embodiment, it is possible to realize a method for appropriately determining at least a part of approach positions in a case where two workpieces are fitted.

Although the embodiments of the present invention have been described, it should be considered that the embodiments disclosed herein are illustrative in all respects and not restrictive. The scope of the present invention is defined by the claims, and is intended to include meanings equivalent to the claims and all modifications within the scope.

**Claims**

1.  A controller (100) for fitting a first workpiece (50) and a second workpiece (60) to each other using a robot (10), wherein

    the robot comprises a gripping mechanism (20) for gripping the first workpiece, and a force sensor (18),
    the controller is configured to cause the robot to perform

    an operation (S105; S112; S122; S137) of pressing the first workpiece against the second workpiece with a predetermined force, and
    an operation (S106; S113; S123; S128; S138; S143) of changing a posture of the first workpiece with respect to the second workpiece in a state where the first workpiece is pressed against the second workpiece, and

    the controller is configured to search for the posture of the first workpiece in which a first surface (52) of the first workpiece to be in contact with the second workpiece and a second surface (64) of the second workpiece to be in contact with the first workpiece are parallel to each other, based on an evaluation index related to a distance between the first workpiece and the second workpiece (S108; S115; S125, S126; S130, S131; S140, S141; S145, S146).

2.  The controller according to claim 1, wherein the evaluation index is a distance from a surface (66) set in advance in the second workpiece to a measurement point set in a coordinate system with an arm tip end of the robot as a reference.

3.  The controller according to claim 2, wherein the measurement point is set such that, when the measurement point is projected onto a surface including the first surface, a projection position is present within a range defined by two outermost sides of the first surface to be in contact with the second surface in the operation of changing the posture of the first workpiece.

4.  The controller according to claim 1, wherein the evaluation index is a correction amount for instructions given to the robot, for pressing the first workpiece against the second workpiece with the predetermined force.

5.  The controller according to any one of claims 1 to 4, wherein the controller is configured to determine a posture in which the evaluation index becomes an extreme value, as the posture of the first workpiece in which the first surface and the second surface are parallel to each other.

6.  The controller according to any one of claims 1 to 5, wherein a reference point for controlling a position and a posture of the robot is set inside the first surface of the first workpiece.

7.  The controller according to any one of claims 1 to 6, wherein
    the operation of changing the posture of the first workpiece with respect to the second workpiece comprises

    an operation (S 123; S138) of rotating the first workpiece in a first direction around an axis orthogonal to a direction in which the first workpiece is pressed against the second workpiece, and
    an operation (S128; S143) of rotating the first workpiece in a second direction that is an opposite direction to the first direction.

8.  The controller according to claim 7, wherein the controller is configured to determine an average of a first posture of the first workpiece determined by rotating the first workpiece in the first direction and a second posture of the first workpiece determined by rotating the first workpiece in the second direction, as the posture of the first workpiece in which the first surface and the second surface are parallel to each other.

9.  The controller according to any one of claims 1 to 6, wherein
    the operation of changing the posture of the first workpiece with respect to the second workpiece comprises

    an operation (S106; S113) of changing the posture of the first workpiece with respect to the second workpiece at a first change speed, and
    an operation (S123; S128; S138; S143) of changing the posture of the first workpiece with respect to the second workpiece at a second change speed different from the first change speed.

**10.** The controller according to claim 9, wherein the second change speed is smaller than the first change speed.

**11.** The controller according to any one of claims 1 to 6, wherein
the controller is configured to

determine the posture of the first workpiece in which the first surface and the second surface are parallel to each other, based on a result of a search obtained by rotating the first workpiece only in a first direction around an axis orthogonal to a direction in which the first workpiece is pressed against the second workpiece (S106, S108; S113, S115), and
update the posture of the first workpiece in which the first surface and the second surface are parallel to each other, based on a result of a search obtained by rotating the first workpiece in the first direction and a result of a search obtained by rotating the first workpiece in a second direction that is an opposite direction to the first direction (S123, S126, S128, S131, S133; S138, S141, S143, S146, S148).

**12.** The controller according to claim 11, wherein
the controller is configured to

rotate the first workpiece at a first change speed in a case of rotating the first workpiece only in the first direction, and
rotate the first workpiece at a second change speed smaller than the first change speed in a case of rotating the first workpiece in the first direction and the second direction.

**13.** The controller according to any one of claims 1 to 12, wherein the controller is configured to remove an offset based on force information output from the force sensor in a state where the first workpiece and the second workpiece are not in contact with each other (S103; S110; S120; S135).

**14.** A control method for fitting a first workpiece (50) and a second workpiece (60) to each other using a robot (10), wherein

the first workpiece is gripped by a gripping mechanism (20) of the robot (10), and
the control method comprises

pressing the first workpiece against the second workpiece with a predetermined force (S105; S112; S122; S137),
causing the robot to change a posture of the first workpiece with respect to the second workpiece in a state where the first workpiece is pressed against the second workpiece (S106; S113; S123; S128; S138; S143), and
searching for the posture of the first workpiece in which a first surface (52) of the first workpiece to be in contact with the second workpiece and a second surface (64) of the second workpiece to be in contact with the first workpiece are parallel to each other, based on an evaluation index related to a distance between the first workpiece and the second workpiece (S108; S115; S125, S126; S130, S131; S140, S141; S145, S146).

**15.** A control program (114) for fitting a first workpiece (50) and a second workpiece (60) to each other, wherein

the first workpiece is gripped by a gripping mechanism (20) of a robot (10), and
the control program causes a computer (100) to perform:

giving instructions to the robot for pressing the first workpiece against the second workpiece with a predetermined force (S 105; S112; S122; S137),
giving instructions to the robot for changing a posture of the first workpiece with respect to the second workpiece in a state where the first workpiece is pressed against the second workpiece (S106; S 113; S 123; S 128; S138; S143), and
searching for the posture of the first workpiece in which a first surface (52) of the first workpiece to be in contact with the second workpiece and a second surface (64) of the second workpiece to be in contact with the first workpiece are parallel to each other, based on an evaluation index related to a distance between the first workpiece and the second workpiece (S108; S115; S125, S 126; S130, S131; S140, S141; S145, S146).

FIG.1

EP 4 417 378 A1

**FIG.2**

FIG.3

FIG.4

FIG.5

```
        ┌────────────────────────────────┐
        │   CALIBRATION PROCESS OF       │
        │   APPROACH POSITION            │
        └────────────────────────────────┘
                      │
                      ▼                        S1
        ┌────────────────────────────────┐
        │  PERFORM Rx/Ry/Z CALIBRATION   │
        │           PROCESS              │
        └────────────────────────────────┘
                      │
                      ▼                        S2
        ┌────────────────────────────────┐
        │  PERFORM X/Y/Rz CALIBRATION    │
        │           PROCESS              │
        └────────────────────────────────┘
                      │
                      ▼                        S3
        ┌────────────────────────────────┐
        │ DETERMINE RECEIVING WORKPIECE  │
        │ ANGULAR POSITION ON BASIS OF   │
        │ INFORMATION DETERMINED         │
        │ IN Rx/Ry/Z CALIBRATION PROCESS │
        │ AND INFORMATION DETERMINED IN  │
        │ X/Y/Rz CALIBRATION PROCESS     │
        └────────────────────────────────┘
                      │
                      ▼                        S4
        ┌────────────────────────────────┐
        │ OFFSET CLEARANCES ΔXtc, ΔYtc,  │
        │ and ΔZtc FROM RECEIVING        │
        │ WORKPIECE ANGULAR POSITION TO  │
        │ CALCULATE APPROACH POSITION    │
        └────────────────────────────────┘
                      │
                      ▼
                 ┌─────────┐
                 │   END   │
                 └─────────┘
```

PERFORM Rx/Ry/Z CALIBRATION PROCESS — S1

PERFORM X/Y/Rz CALIBRATION PROCESS — S2

DETERMINE RECEIVING WORKPIECE ANGULAR POSITION ON BASIS OF INFORMATION DETERMINED IN Rx/Ry/Z CALIBRATION PROCESS AND INFORMATION DETERMINED IN X/Y/Rz CALIBRATION PROCESS — S3

OFFSET CLEARANCES $\Delta$Xtc, $\Delta$Ytc, and $\Delta$Ztc FROM RECEIVING WORKPIECE ANGULAR POSITION TO CALCULATE APPROACH POSITION — S4

FIG.6

FIG.7

FIG.8A

FIG.8B

MEASUREMENT
POINT

20

21 — — 22

50

52

TCP
(+ MEASUREMENT
POINT)

Xt/Yt
64

Zt

60

20

21 — — 22

Zt

50

52

18

MEASUREMENT
POINT

TCP

Xt/Yt
64

60

FIG.9

FIG.10

FIG.11

FIG.12

EP 4 417 378 A1

FIG.13

FIG.14

```
        ┌──────────────────────────────┐
        │  Rx/Ry/Z CALIBRATION PROCESS │
        └──────────────────────────────┘
                       │
                       ▼  S101
        ┌──────────────────────────────┐
        │ INITIALIZE CURRENT NUMBER OF │
        │ TIMES OF CALIBRATION TO ZERO │
        └──────────────────────────────┘
                       │
                       ▼  S102
        ┌──────────────────────────────┐
        │ MOVE FIRST WORKPIECE TO      │
        │ ROUGH TEACHING POSITION      │
        └──────────────────────────────┘
         (A)──────────► │
                       ▼  S103
        ┌──────────────────────────────┐
        │       REMOVE OFFSET          │
        └──────────────────────────────┘
                       │
                       ▼  S104
        ┌──────────────────────────────┐
        │ SET ANGLE Rx OF TCP TO       │
        │ START ANGLE                  │
        └──────────────────────────────┘
                       │
                       ▼  S105
        ┌──────────────────────────────┐
        │ GIVE INSTRUCTIONS TO ROBOT   │
        │ SUCH THAT FORCE Fz GENERATED │
        │ IN Zt-AXIS DIRECTION OF TCP  │
        │ COINCIDES WITH TARGET VALUE  │
        └──────────────────────────────┘
                       │
                       ▼  S106
        ┌──────────────────────────────┐
        │ CHANGE ANGLE Rx OF TCP       │
        │ FROM START ANGLE TO END      │
        │ ANGLE                        │
        └──────────────────────────────┘
                       │
                       ▼  S107
        ┌──────────────────────────────┐
        │ COLLECT TEMPORAL CHANGE OF   │
        │ Z POSITION CORRECTION AMOUNT │
        └──────────────────────────────┘
                       │
                       ▼  S108
        ┌──────────────────────────────┐
        │ DETERMINE ANGLE Rx AT WHICH  │
        │ TEMPORAL CHANGE OF Z         │
        │ POSITION CORRECTION AMOUNT   │
        │ IS MAXIMAL VALUE, AS Rx      │
        │ CALIBRATION VALUE            │
        └──────────────────────────────┘
                       │
                       ▼  S109
        ┌──────────────────────────────┐
        │ MOVE FIRST WORKPIECE TO      │
        │ UPDATED ROUGH TEACHING       │
        │ POSITION                     │
        └──────────────────────────────┘
                       │
                       ▼  S110
        ┌──────────────────────────────┐
        │       REMOVE OFFSET          │
        └──────────────────────────────┘
                       │
                       └────────────────►
```

```
                       ▼  S111
        ┌──────────────────────────────┐
        │ SET ANGLE Ry OF TCP AS       │
        │ START ANGLE                  │
        └──────────────────────────────┘
                       │
                       ▼  S112
        ┌──────────────────────────────┐
        │ GIVE INSTRUCTIONS TO ROBOT   │
        │ SUCH THAT FORCE Fz GENERATED │
        │ IN Zt-AXIS DIRECTION OF TCP  │
        │ COINCIDES WITH TARGET VALUE  │
        └──────────────────────────────┘
                       │
                       ▼  S113
        ┌──────────────────────────────┐
        │ CHANGE ANGLE Ry OF TCP       │
        │ FROM START ANGLE TO END      │
        │ ANGLE                        │
        └──────────────────────────────┘
                       │
                       ▼  S114
        ┌──────────────────────────────┐
        │ COLLECT TEMPORAL CHANGE      │
        │ OF Z POSITION CORRECTION     │
        │ AMOUNT                       │
        └──────────────────────────────┘
                       │
                       ▼  S115
        ┌──────────────────────────────┐
        │ DETERMINE ANGLE Ry AT WHICH  │
        │ TEMPORAL CHANGE OF Z         │
        │ POSITION CORRECTION AMOUNT   │
        │ IS MAXIMAL VALUE, AS Ry      │
        │ CALIBRATION VALUE            │
        └──────────────────────────────┘
                       │
                       ▼  S116
        ┌──────────────────────────────┐
        │ MOVE FIRST WORKPIECE TO      │
        │ UPDATED ROUGH TEACHING       │
        │ POSITION                     │
        └──────────────────────────────┘
                       │
                       ▼  S117
        ┌──────────────────────────────┐
        │ INCREMENT NUMBER OF TIMES    │
        │ OF CALIBRATION BY ONE        │
        └──────────────────────────────┘
                       │
                       ▼  S118
              ╱─────────────────╲   NO
             ╱ HAS NUMBER OF TIMES OF╲────► (A)
            ⟨  CALIBRATION REACHED    ⟩
             ╲ PREDETERMINED NUMBER  ╱
              ╲OF TIMES OF CALIBRATION?╱
               ╲─────────────────╱
                       │ YES
                       ▼  S119
        ┌──────────────────────────────┐
        │ DETERMINE POSITION Z         │
        │ (Z CALIBRATION VALUE) AT     │
        │ WHICH FIRST WORKPIECE IS     │
        │ BROUGHT INTO CONTACT WITH    │
        │ SECOND WORKPIECE             │
        └──────────────────────────────┘
                       │
                       ▼
                  ┌─────────┐
                  │   END   │
                  └─────────┘
```

37

FIG.15A  FIG.15B  FIG.15C  FIG.15D  FIG.15E

PLAN VIEW

SIDE VIEW

EP 4 417 378 A1

FIG.16A  FIG.16B  FIG.16C  FIG.16D  FIG.16E

PLAN VIEW

SIDE VIEW

FIG.17A  FIG.17B  FIG.17C  FIG.17D

EP 4 417 378 A1

# FIG.18

LOW-SPEED SEARCH

B

**S120**
REMOVE OFFSET

**S121**
SET ANGLE Rx OF TCP AS START ANGLE

**S122**
GIVE INSTRUCTIONS TO ROBOT SUCH THAT FORCE Fz GENERATED IN Zt-AXIS DIRECTION OF TCP COINCIDES WITH TARGET VALUE

**S123**
ROTATE ANGLE Rx OF TCP AT PREDETERMINED ROTATION SPEED

**S124**
COLLECT TEMPORAL CHANGE OF Z POSITION CORRECTION AMOUNT

**S125**
HAS Z POSITION CORRECTION AMOUNT REACHED MAXIMAL VALUE?
NO
YES

**S126**
DETERMINE ANGLE Rx AT WHICH Z POSITION CORRECTION AMOUNT HAS REACHED MAXIMAL VALUE AS Rx CALIBRATION VALUE (OUTWARD PATH)

**S127**
STOP ROTATION AROUND Xt AXIS AFTER PREDETERMINED TIME HAS ELAPSED FROM TIME WHEN Z POSITION CORRECTION AMOUNT HAS REACHED MAXIMAL VALUE

**S128**
REVERSELY ROTATE ANGLE Rx OF TCP AT PREDETERMINED ROTATION SPEED

**S129**
COLLECT TEMPORAL CHANGE OF Z POSITION CORRECTION AMOUNT

**S130**
HAS Z POSITION CORRECTION AMOUNT REACHED MAXIMAL VALUE?
NO
YES

**S131**
DETERMINE ANGLE Rx AT WHICH Z POSITION CORRECTION AMOUNT HAS REACHED MAXIMAL VALUE AS Rx CALIBRATION VALUE (RETURN PATH)

**S132**
STOP ROTATION AROUND Xt AXIS AFTER PREDETERMINED TIME HAS ELAPSED FROM TIME WHEN Z POSITION CORRECTION AMOUNT HAS REACHED MAXIMAL VALUE

**S133**
DETERMINE Rx CALIBRATION VALUE ON BASIS OF Rx CALIBRATION VALUE (OUTWARD PATH) AND Rx CALIBRATION VALUE (RETURN PATH)

**S134**
MOVE FIRST WORKPIECE TO UPDATED ROUGH TEACHING POSITION

A

FIG.19

```
           ( A )
            │
            ▼                    S135
┌──────────────────────────┐
│     REMOVE OFFSET        │
└──────────────────────────┘
            │
            ▼                    S136
┌──────────────────────────┐
│  SET ANGLE Ry OF TCP AS  │
│     START ANGLE          │
└──────────────────────────┘
            │
            ▼                    S137
┌──────────────────────────┐
│  GIVE INSTRUCTIONS TO ROBOT │
│  SUCH THAT FORCE Fz GENERATED │
│  IN Zt-AXIS DIRECTION OF TCP │
│  COINCIDES WITH TARGET VALUE │
└──────────────────────────┘
            │
            ▼                    S138
┌──────────────────────────┐
│  ROTATE ANGLE Ry OF TCP AT │
│  PREDETERMINED ROTATION SPEED │
└──────────────────────────┘
            │
            ▼                    S139
┌──────────────────────────┐
│  COLLECT TEMPORAL CHANGE OF │
│  Z POSITION CORRECTION AMOUNT │
└──────────────────────────┘
            │
            ▼                    S140
       HAS Z POSITION
  CORRECTION AMOUNT REACHED    ── NO
       MAXIMAL VALUE?
            │ YES
            ▼                    S141
┌──────────────────────────┐
│  DETERMINE ANGLE Ry AT WHICH │
│  Z POSITION CORRECTION AMOUNT │
│  HAS REACHED MAXIMAL VALUE AS │
│  Ry CALIBRATION VALUE (OUTWARD │
│  PATH)                       │
└──────────────────────────┘
            │
            ▼                    S142
┌──────────────────────────┐
│  STOP ROTATION AROUND Yt AXIS │
│  AFTER PREDETERMINED TIME HAS │
│  ELAPSED FROM TIME WHEN      │
│  Z POSITION CORRECTION AMOUNT │
│  HAS REACHED MAXIMAL VALUE   │
└──────────────────────────┘
```

```
            ▼                    S143
┌──────────────────────────┐
│  REVERSELY ROTATE ANGLE Ry OF │
│  TCP AT PREDETERMINED ROTATION │
│  SPEED                       │
└──────────────────────────┘
            │
            ▼                    S144
┌──────────────────────────┐
│  COLLECT TEMPORAL CHANGE OF │
│  Z POSITION CORRECTION AMOUNT │
└──────────────────────────┘
            │
            ▼                    S145
       HAS Z POSITION
  CORRECTION AMOUNT REACHED    ── NO
       MAXIMAL VALUE?
            │ YES
            ▼                    S146
┌──────────────────────────┐
│  DETERMINE ANGLE Ry AT WHICH │
│  Z POSITION CORRECTION AMOUNT │
│  HAS REACHED MAXIMAL VALUE AS │
│  Ry CALIBRATION VALUE (RETURN │
│  PATH)                       │
└──────────────────────────┘
            │
            ▼                    S147
┌──────────────────────────┐
│  STOP ROTATION AROUND Yt AXIS │
│  AFTER PREDETERMINED TIME HAS │
│  ELAPSED FROM TIME WHEN      │
│  Z POSITION CORRECTION AMOUNT │
│  HAS REACHED MAXIMAL VALUE   │
└──────────────────────────┘
            │
            ▼                    S148
┌──────────────────────────┐
│  DETERMINE Ry CALIBRATION │
│  VALUE ON BASIS OF Ry        │
│  CALIBRATION VALUE (OUTWARD   │
│  PATH) AND Ry CALIBRATION VALUE │
│  (RETURN PATH)               │
└──────────────────────────┘
            │
            ▼                    S149
┌──────────────────────────┐
│  MOVE FIRST WORKPIECE TO  │
│  UPDATED ROUGH TEACHING   │
│  POSITION                 │
└──────────────────────────┘
            │
            ▼                    S150
       HAS LOW-SPEED
  SEARCH BEEN PERFORMED ONLY   ── NO ──▶ ( B )
   PREDETERMINED NUMBER OF
   TIMES OF CALIBRATION?
            │ YES
            ▼
         ( END )
```

FIG.20A
FIG.20B
FIG.20C

FIG.21A  FIG.21B  FIG.21C  FIG.21D

EP 4 417 378 A1

FIG.22A

FIG.22B

FIG.22C

FIG.22D

EP 4 417 378 A1

FIG.23

XtYt ORIGIN

Vec2

Vec1

60

62

Xt

Yt

Zt

## FIG.24

X/Y/Rz CALIBRATION PROCESS

S201
ARRANGE FIRST WORKPIECE ABOVE SECOND WORKPIECE IN POSTURE OF Rx CALIBRATION VALUE AND Ry CALIBRATION VALUE

S202
INCLINE FIRST WORKPIECE BY PREDETERMINED INCLINATION ANGLE FROM Rx CALIBRATION VALUE AND INCLINE FIRST WORKPIECE BY PREDETERMINED INCLINATION ANGLE FROM Ry CALIBRATION VALUE

S203
INSERT FIRST WORKPIECE INTO FITTING HOLE OF SECOND WORKPIECE

S204
PRESS ONE CORNER OF FIRST WORKPIECE AGAINST FIRST SURFACE OF FITTING HOLE

S205
MOVE FIRST WORKPIECE ALONG FIRST SURFACE IN DIRECTION OF SECOND SURFACE

S206
IS REACTION FORCE EXCEEDING PREDETERMINED VALUE RECEIVED? — NO

YES

S207
RETURN FIRST WORKPIECE BY PREDETERMINED DISTANCE ALONG FIRST SURFACE IN DIRECTION OPPOSITE TO SECOND SURFACE

S208
ACQUIRE COORDINATES OF FIRST POSITION MEASUREMENT POINT

S209
MOVE FIRST WORKPIECE ALONG FIRST SURFACE IN DIRECTION OPPOSITE TO SECOND SURFACE IN STATE WHERE ONE CORNER OF FIRST WORKPIECE IS PRESSED AGAINST FIRST SURFACE

S210
IS REACTION FORCE EXCEEDING PREDETERMINED VALUE RECEIVED? — NO

YES

S211
RETURN FIRST WORKPIECE BY PREDETERMINED DISTANCE ALONG FIRST SURFACE IN DIRECTION OF SECOND SURFACE

S212
ACQUIRE COORDINATES OF SECOND POSITION MEASUREMENT POINT

S213
CALCULATE FIRST DIRECTION VECTOR ON BASIS OF POSITION OF FIRST POSITION MEASUREMENT POINT AND POSITION OF SECOND POSITION MEASUREMENT POINT

S214
DETERMINE Rz CALIBRATION VALUE ON BASIS OF FIRST DIRECTION VECTOR

A

# FIG.25

A

S215
PRESS ANOTHER CORNER OF
FIRST WORKPIECE AGAINST
SECOND SURFACE OF FITTING
HOLE

S216
MOVE FIRST WORKPIECE
ALONG SECOND SURFACE IN
DIRECTION OPPOSITE TO
FIRST SURFACE

S217
IS REACTION FORCE
EXCEEDING PREDETERMINED
VALUE RECEIVED?
NO
YES

S218
RETURN FIRST WORKPIECE
BY PREDETERMINED DISTANCE
ALONG SECOND SURFACE IN
DIRECTION OF FIRST SURFACE

S219
ACQUIRE COORDINATES OF THIRD
POSITION MEASUREMENT POINT

S220
MOVE FIRST WORKPIECE ALONG
SECOND SURFACE IN DIRECTION
OF FIRST SURFACE IN STATE
WHERE ONE CORNER OF FIRST
WORKPIECE IS PRESSED
AGAINST SECOND SURFACE

S221
IS REACTION FORCE
EXCEEDING PREDETERMINED
VALUE RECEIVED?
NO
YES

S222
RETURN FIRST WORKPIECE BY
PREDETERMINED DISTANCE
ALONG SECOND SURFACE IN
DIRECTION OPPOSITE TO FIRST
SURFACE

S223
ACQUIRE COORDINATES OF FOURTH
POSITION MEASUREMENT POINT

S224
CALCULATE SECOND DIRECTION
VECTOR ON BASIS OF POSITION
OF THIRD POSITION MEASUREMENT
POINT AND POSITION OF FOURTH
POSITION MEASUREMENT POINT

S225
CALCULATE XtYt ORIGIN ON
BASIS OF FIRST DIRECTION
VECTOR AND SECOND
DIRECTION VECTOR

S226
DETERMINE X CALIBRATION
VALUE AND Y CALIBRATION
VALUE FROM CALCULATED
XtYt ORIGIN

END

FIG.26

POSITION MEASUREMENT POINT

50

60

62

FIG.27

DIRECTION
VECTOR    50    60

POSITION MEASUREMENT
POINT

62

Europäisches
Patentamt

European
Patent Office

Office européen
des brevets

## EUROPEAN SEARCH REPORT

**Application Number**

EP 24 15 3979

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHOI MYOUNG-SU ET AL: "Kinesthetic sensing of hole position by 3-finger gripper", 2020 17TH INTERNATIONAL CONFERENCE ON UBIQUITOUS ROBOTS (UR), IEEE, 22 June 2020 (2020-06-22), pages 520-525, XP033796448, DOI: 10.1109/UR49135.2020.9144928 [retrieved on 2020-07-20] | 1,5,14, 15 | INV. B25J9/16 |
| Y | * figures 1-10 * <br> * page 521 - page 522 * <br> ----- | 2-4,6-13 | |
| Y | CN 106 514 712 B (FANUC CORP) 6 April 2018 (2018-04-06) * figures 1-16a * * claim 1 * <br> ----- | 6-13 | |
| Y | LUO REN C ET AL: "A novel peg-in-hole approach based on geometrical analysis for inclined uncertainty", 2017 IEEE INTERNATIONAL CONFERENCE ON ADVANCED INTELLIGENT MECHATRONICS (AIM), IEEE, 3 July 2017 (2017-07-03), pages 891-896, XP033144431, DOI: 10.1109/AIM.2017.8014131 ISBN: 978-1-5090-5998-0 [retrieved on 2017-08-21] | 2,3 | |
| A | * abstract * <br> * figures 2,3 * <br> * page 892 - page 893 * <br> ----- <br> -/-- | 1,4-15 | TECHNICAL FIELDS SEARCHED (IPC) <br> B25J <br> G05B |

The present search report has been drawn up for all claims

| Place of search | Date of completion of the search | Examiner |
|---|---|---|
| The Hague | 28 June 2024 | Lorenzo Barreiro, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

**EUROPEAN SEARCH REPORT**

Application Number

EP 24 15 3979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YAN CHAOJIE ET AL: "Learning-based Contact Status Recognition for Peg-in-Hole Assembly", 2021 IEEE/RSJ INTERNATIONAL CONFERENCE ON INTELLIGENT ROBOTS AND SYSTEMS (IROS), IEEE, 27 September 2021 (2021-09-27), pages 6003-6009, XP034050999, DOI: 10.1109/IROS51168.2021.9636147 [retrieved on 2021-12-03] | 4 | |
| A | * figures 4,5 *<br>* page 6005 - page 6006 *<br>----- | 1-3,5-15 | |

TECHNICAL FIELDS SEARCHED (IPC)

The present search report has been drawn up for all claims

| Place of search | Date of completion of the search | Examiner |
|---|---|---|
| The Hague | 28 June 2024 | Lorenzo Barreiro, M |

EPO FORM 1503 03.82 (P04C01)

## ANNEX TO THE EUROPEAN SEARCH REPORT
## ON EUROPEAN PATENT APPLICATION NO.

EP 24 15 3979

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| CN 106514712 B | 06-04-2018 | CN 106514712 A | 22-03-2017 |
| | | DE 102016116404 A1 | 09-03-2017 |
| | | JP 6208724 B2 | 04-10-2017 |
| | | JP 2017052049 A | 16-03-2017 |
| | | US 2017067728 A1 | 09-03-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018199172 A